(19) Europäisches Patentamt
European Patent Office
Office européen des brevets

(11) Veröffentlichungsnummer: **0 549 530 B1**

(12) **EUROPÄISCHE PATENTSCHRIFT**

(45) Veröffentlichungstag der Patentschrift: **13.12.95**

(21) Anmeldenummer: **92810993.3**

(22) Anmeldetag: **11.12.92**

(51) Int. Cl.6: **D06P 3/66**, D06P 3/62, C09B 31/08, C09B 31/22, C09B 35/039, C09B 43/16, C09B 45/28, C09B 62/04, C09B 56/06

# (54) Verfahren zum Färben oder Bedrucken von hydroxylgruppenhaltigen Fasermaterialien

(30) Priorität: **20.12.91 CH 3814/91**

(43) Veröffentlichungstag der Anmeldung:
**30.06.93 Patentblatt 93/26**

(45) Bekanntmachung des Hinweises auf die Patenterteilung:
**13.12.95 Patentblatt 95/50**

(84) Benannte Vertragsstaaten:
**BE CH DE ES FR GB GR IT LI PT**

(56) Entgegenhaltungen:
**EP-A- 0 011 873**
**EP-A- 0 044 805**
**EP-A- 0 116 513**
**EP-A- 0 357 560**
**CH-A- 135 951**
**CH-A- 671 025**
**DE-A- 2 311 396**
**DE-A- 3 320 972**
**DE-C- 725 224**
**FR-A- 1 480 427**
**FR-A- 1 573 145**
**GB-A- 2 166 147**
**US-A- 2 467 262**

**CHEMICAL ABSTRACTS, vol. 97, no. 14, 4. Oktober 1982, Columbus, Ohio, US; abstract no. 111284, 'Disazodyes'**

**CHEMICAL ABSTRACTS, vol. 111, no. 16, 16. Oktober 1989, Columbus, Ohio, US; abstract no. 136008, INOUE ET AL. 'Water-based copper-containing dye compositions'**

**CHEMICAL ABSTRACTS, vol. 98, no. 20, 16. Mai 1983, Columbus, Ohio, US; abstract no. 162365, BUJALA ET AL. 'Dyes for cellulose fibres'**

(73) Patentinhaber: **CIBA-GEIGY AG**
**Klybeckstrasse 141**
**CH-4002 Basel (CH)**

(72) Erfinder: **McMullan, David Harold**
**Kurzelängeweg 9**
**CH-4123 Allschwil (CH)**
Erfinder: **Schaulin, Rudolf, Dr.**
**Schäferstrasse 62**
**CH-4125 Riehen (CH)**
Erfinder: **Lauk, Urs, Dr.**
**In der Ey 39**
**CH-8047 Zürich (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft ein Verfahren zum Farben oder Bedrucken von hydroxylgruppenhaltigen Fasermaterialien mit Farbstoffmischungen nach dem Di- oder Trichromieprinzip.

Für das Färben oder Bedrucken von textilen Fasermaterialien nach dem Di- oder Trichromieprinzip benötigt man unter anderem Farbstoffe mit möglichst gleichmässigem Farbaufbau bei gleichzeitiger Nuancenkonstanz in verschiedenen Konzentrationen und einer guten Kombinierbarkeit, um gefärbte/bedruckte textile Fasermaterialien zu erhalten, die den Anforderungen weitgehend genügen.

Mit den bisher verwendeten Farbstoffen/Farbstoffmischungen war dieses Ziel nicht immer zu erreichen, insbesondere bezüglich Kombinierbarkeit, Ziehgeschwindigkeit, Ziehgrad, Faser- und Flächenegalität sowie Allgemeinechtheiten, wie z.B. Nassechtheit, und es war deshalb die Aufgabe der vorliegenden Erfindung, verbesserte Verfahren zum Färben oder Bedrucken von hydroxylgruppenhaltigen Fasermaterialien nach dem Di- oder Trichromieprinzip bereitzustellen.

Es wurde nun gefunden, dass das erfindungsgemässe Verfahren die genannten Anforderungen erfüllt.

Gegenstand der vorliegenden Erfindung ist somit ein Verfahren zum Färben oder Bedrücken von hydroxylgruppenhaltigen Fasermaterialien, welches dadurch gekennzeichnet ist, dass man mindestens einen gelb- oder orangefärbenden Farbstoff der Formel

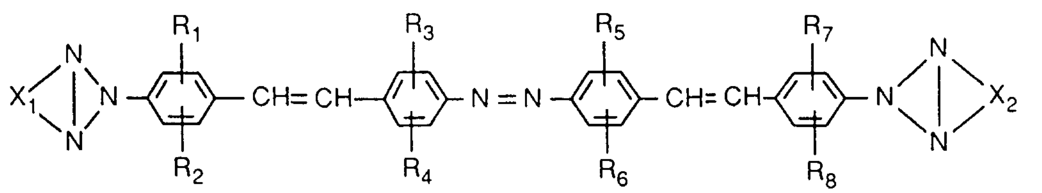
(1),

worin $X_1$ und $X_2$ jeweils ein Rest der Naphthalinreihe sind und $R_1$, $R_2$, $R_3$, $R_4$, $R_5$, $R_6$, $R_7$ und $R_8$ Wasserstoff, $C_1$-$C_8$-Alkyl, $C_1$-$C_8$-Alkoxy, Halogen, Carboxy, Sulfo, Ureido oder gegebenenfalls im Alkylteil substituiertes $C_2$-$C_6$-Alkanoylamino bedeuten, zusammen mit mindestens einem blaufärbenden und/oder mindestens einem rotfärbenden Farbstoff verwendet.

Als Halogen kommen für $R_1$, $R_2$, $R_3$, $R_4$, $R_5$, $R_6$, $R_7$ und $R_8$ in der Formel (1) unabhängig voneinander z.B. Fluor, Brom oder insbesondere Chlor in Betracht.

Als $C_1$-$C_8$-Alkyl kommen für $R_1$, $R_2$, $R_3$, $R_4$, $R_5$, $R_6$, $R_7$ und $R_8$ in der Formel (1) unabhängig voneinander z. B. Methyl, Äthyl, Propyl, Isopropyl, Butyl, sek.-Butyl, tert.-Butyl, Isobutyl, Pentyl, Hexyl, Heptyl und Octyl in Betracht. Vorzugsweise sind $R_1$, $R_2$, $R_3$, $R_4$, $R_5$, $R_6$, $R_7$ und $R_8$ $C_1$-$C_4$-Alkyl.

Als $C_1$-$C_8$-Alkoxy kommt für $R_1$, $R_2$, $R_3$, $R_4$, $R_5$, $R_6$, $R_7$ und $R_8$ in der Formel (1) insbesondere $C_1$-$C_4$-Alkoxy, wie Methoxy, Äthoxy, Propoxy, Isopropoxy, Butoxy, sek.-Butoxy, Isobutoxy oder tert.-Butoxy in Betracht.

Als $C_2$-$C_6$-Alkanoylamino kommt für $R_1$, $R_2$, $R_3$, $R_4$, $R_5$, $R_6$, $R_7$ und $R_8$ in der Formel (1) insbesondere $C_2$-$C_4$-Alkanoylamino, wie z.B. Acetylamino oder Propionylamino, in Betracht. Als im Alkylteil substituiertes $C_2$-$C_6$-Alkanoylamino kommen z.B. die durch Carboxy oder insbesondere Hydroxy substituierten Reste in Betracht.

Als Reste der Naphthalinreihe kommen für $X_1$ und $X_2$ unsubstituierte oder beispielsweise durch $C_1$-$C_4$-Alkyl, $C_1$-$C_4$-Alkoxy, Halogen, Carboxy, Sulfo, Ureido oder $C_2$-$C_4$-Alkanoylamino, insbesondere Sulfo, substituierte Naphthalinreste in Betracht.

Bevorzugt verwendet man Farbstoffe der Formel (1), worin $R_1$, $R_2$, $R_3$, $R_4$, $R_5$, $R_6$, $R_7$ und $R_8$ Wasserstoff, $C_1$-$C_4$-Alkyl, $C_1$-$C_4$-Alkoxy, $C_2$-$C_4$-Alkanoylamino, Halogen oder Sulfo, insbesondere Wasserstoff oder Sulfo, sind.

Besonders bevorzugt verwendet man Farbstoffe der Formel (1), worin $R_1$, $R_2$, $R_3$, $R_4$, $R_5$, $R_6$, $R_7$ und $R_8$ Wasserstoff oder Sulfo sind und $X_1$ und $X_2$ für unsubstituierte oder durch $C_1$-$C_4$-Alkyl, $C_1$-$C_4$-Alkoxy, Halogen, Carboxy, Sulfo, Ureido oder $C_2$-$C_4$-Alkanoylamino, insbesondere Sulfo, substituierte Naphthalinreste stehen.

Ganz besonders bevorzugt verwendet man als Farbstoffe der Formel (1) Farbstoffe der Formel

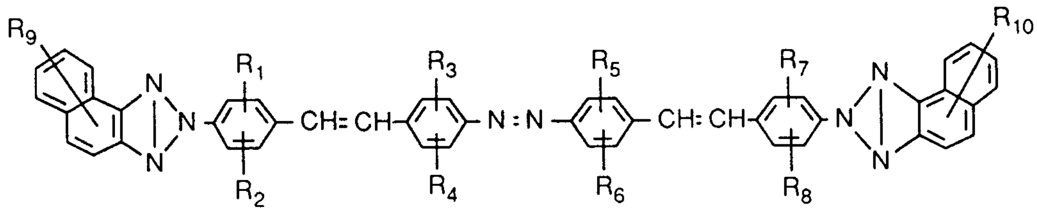 (2),

worin für $R_1$, $R_2$, $R_3$, $R_4$, $R_5$, $R_6$, $R_7$ und $R_8$ die oben angegebenen Bedeutungen und Bevorzugungen gelten und $R_9$ und $R_{10}$ Wasserstoff, $C_1$-$C_4$-Alkyl, $C_1$-$C_4$-Alkoxy, $C_2$-$C_4$-Alkanoylamino, Halogen oder Sulfo, insbesondere Wasserstoff oder Sulfo, sind.

Als Farbstoffe der Formel (1) sind für das erfindungsgemässe Verfahren Farbstoffe der Formel

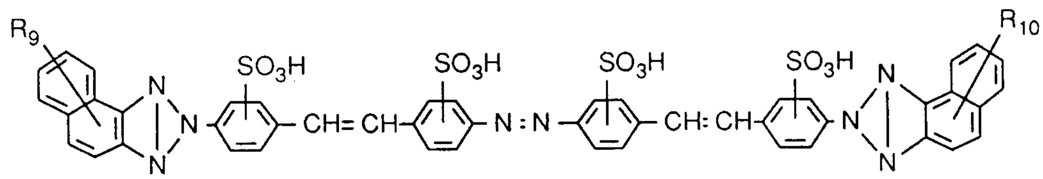 (3),

worin $R_9$ und $R_{10}$ Wasserstoff, $C_1$-$C_4$-Alkyl, $C_1$-$C_4$-Alkoxy, $C_2$-$C_4$-Alkanoylamino. Halogen oder Sulfo, insbesondere Wasserstoff oder Sulfo, sind, von besonderem Interesse.

Als Farbstoff der Formel (1) ist für das erfindungsgemässe Verfahren der Farbstoff der Formel

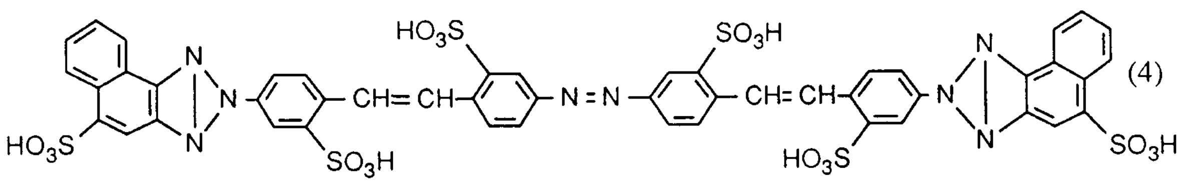 (4)

von ganz besonderem Interesse.

Als blaufärbende Farbstoffe verwendet man in dem erfindungsgemässen Verfahren vorzugsweise mindestens einen Farbstoff der Formeln (5), (6) und (7)

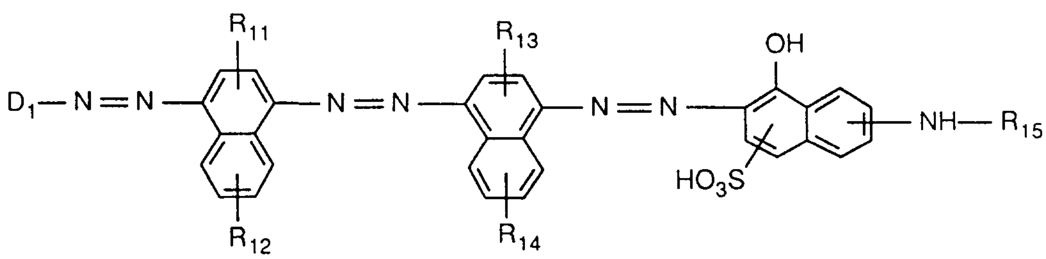 (5),

worin $D_1$ gegebenenfalls substituiertes Phenyl oder Naphthyl, $R_{11}$, $R_{12}$, $R_{13}$ und $R_{14}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten und $R_{15}$ Wasserstoff, gegebenenfalls substituiertes $C_1$-$C_8$-Alkyl, gegebenenfalls im Alkylteil substituiertes $C_2$-$C_6$-Alkanoyl oder gegebenenfalls im Phenylring substituiertes Phenyl oder Benzoyl bedeutet,

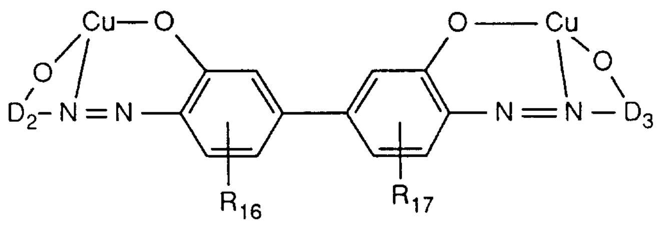

(6),

worin $D_2$ und $D_3$ gegebenenfalls substituiertes Naphthyl und $R_{16}$ und $R_{17}$ Wasserstoff. gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten,

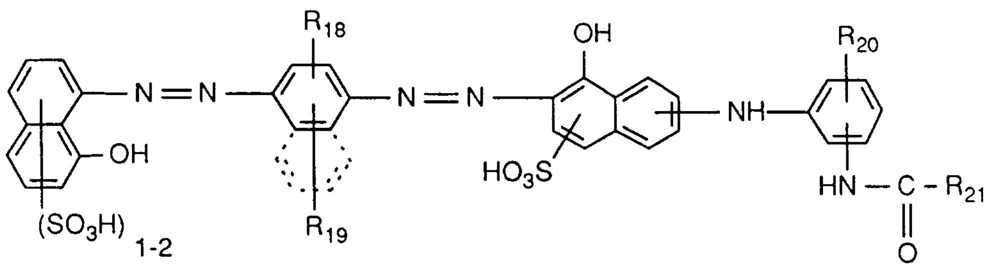

(7),

worin $R_{18}$, $R_{19}$ und $R_{20}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten und $R_{21}$ gegebenenfalls substituiertes $C_1$-$C_8$-Alkyl oder Phenyl ist.

Als Halogen kommen für $R_{11}$, $R_{12}$, $R_{13}$ und $R_{14}$ in der Formel (5), $R_{16}$ und $R_{17}$ in Formel (6) und $R_{18}$, $R_{19}$ und $R_{20}$ in Formel (7) unabhängig voneinander z.B. Fluor, Brom oder insbesondere Chlor in Betracht.

Als gegebenenfalls substituiertes $C_1$-$C_8$-Alkyl kommt für $R_{11}$, $R_{12}$, $R_{13}$, $R_{14}$ und $R_{15}$ in der Formel (5), $R_{16}$ und $R_{17}$ in Formel (6) und $R_{18}$, $R_{19}$, $R_{20}$ und $R_{21}$ in Formel (7) insbesondere $C_1$-$C_4$-Alkyl, wie Methyl, Äthyl, Propyl, Isopropyl, Butyl, sek.-Butyl, tert.-Butyl oder Isobutyl, sowie die z.B. durch $C_1$-$C_4$-Alkoxy, $C_1$-$C_4$-Alkoxycarbonyl, Hydroxy, Halogen, wie z.B. Chlor oder Fluor, Carboxy, Cyan, Sulfo oder Sulfato substituierten Reste in Betracht.

Als gegebenenfalls substituiertes $C_1$-$C_8$-Alkoxy kommt für $R_{11}$, $R_{12}$, $R_{13}$ und $R_{14}$ in der Formel (5), $R_{16}$ und $R_{17}$ in Formel (6) und $R_{18}$, $R_{19}$ und $R_{20}$ in Formel (7) insbesondere $C_1$-$C_4$-Alkoxy, wie Methoxy, Äthoxy, Propoxy, Isopropoxy, Butoxy, sek.-Butoxy, Isobutoxy oder tert.-Butoxy, sowie die z.B. durch Hydroxy oder Carboxy substituierten Reste in Betracht.

Als $C_2$-$C_6$-Alkanoylamino kommt für $R_{11}$, $R_{12}$, $R_{13}$ und $R_{14}$ in der Formel (5), $R_{16}$ und $R_{17}$ in Formel (6) und $R_{18}$, $R_{19}$ und $R_{20}$ in Formel (7) insbesondere $C_2$-$C_4$-Alkanoylamino, wie z.B. Acetylamino oder Propionylamino, in Betracht. Als im Alkylteil substituiertes $C_2$-$C_6$-Alkanoylamino kommen z.B die durch Hydroxy substituierten Reste in Betracht.

Als $C_2$-$C_6$-Alkanoyl kommt für $R_{15}$ in der Formel (5) insbesondere $C_2$-$C_4$-Alkanoyl, wie z.B. Acetyl oder Propionyl, in Betracht. Als im Alkylteil substituiertes $C_2$-$C_6$-Alkanoyl kommen z.B die durch Hydroxy substituierten Reste in Betracht.

Die Reste $D_1$ in der Bedeutung als Phenyl oder Naphthyl, $D_2$ und $D_3$ als Naphthyl, $R_{15}$ als Phenyl oder Benzoyl sowie $R_{21}$ als Phenyl können unsubstituiert oder substituiert sein. Als Beispiele für Substituenten seien Halogen, Amino, Sulfo, Carboxy, Ureido, gegebenenfalls im Alkylteil durch Hydroxy weitersubstituiertes $C_2$-$C_4$-Alkanoylamino, $C_1$-$C_4$-Alkyl, gegebenenfalls durch Hydroxy oder Carboxy weitersubstituiertes $C_1$-$C_4$-Alkoxy sowie gegebenenfalls im Phenylring durch Carboxy, Halogen, Sulfo, $C_1$-$C_4$-Alkyl oder $C_1$-$C_4$-Alkoxy weitersubstituiertes Benzoylamino oder Phenylamino.

Als blaufärbende Farbstoffe verwendet man für das erfindungsgemässe Verfahren bevorzugt mindestens einen Farbstoff der Formeln

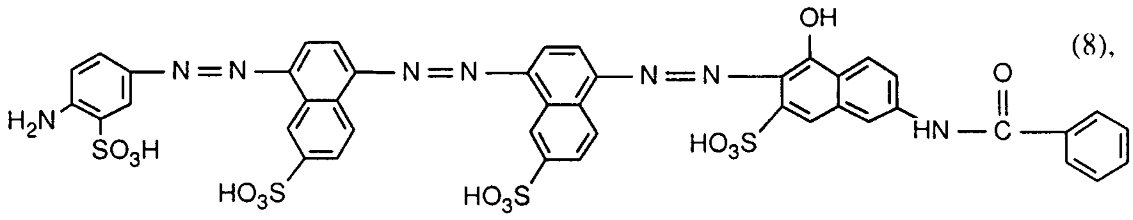

(8),

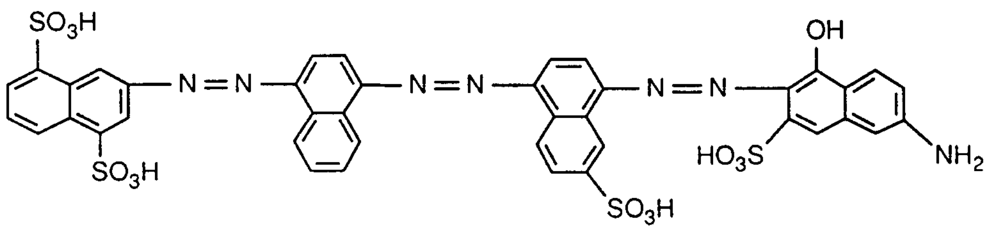

(9),

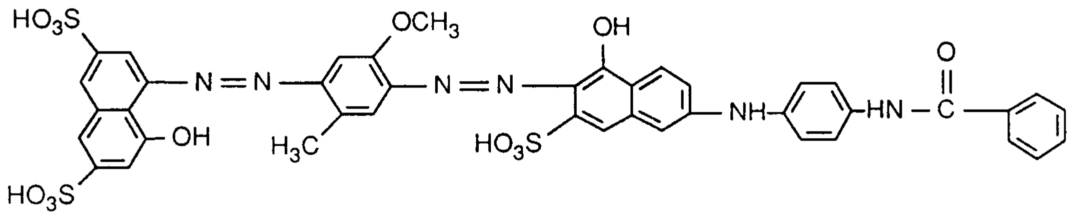

(10),

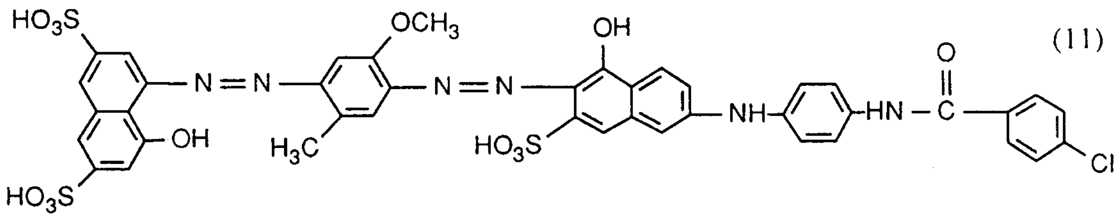

(11)

und

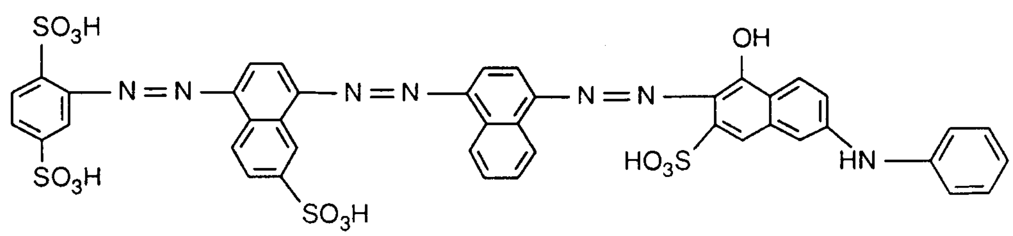

(11a)

insbesondere den Farbstoff der Formel (8).

Als rotfärbende Farbstoffe verwendet man für das erfindungsgemässe Verfahren vorzugsweise mindestens einen Farbstoff der Formeln (12), (13), (14), (15) und (16)

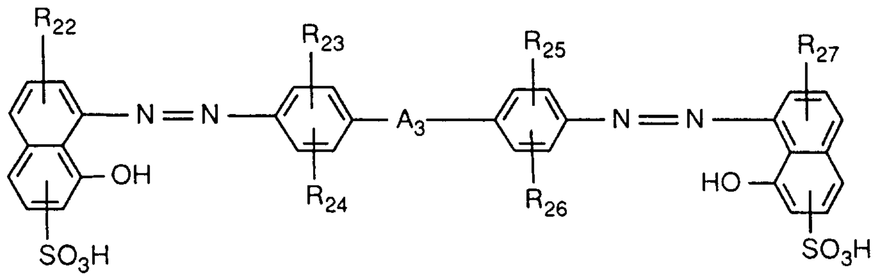

(12),

worin $R_{22}$, $R_{23}$, $R_{24}$, $R_{25}$, $R_{26}$ und $R_{27}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten und $A_3$ ein Rest der Formel

-NH-,

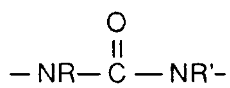

oder

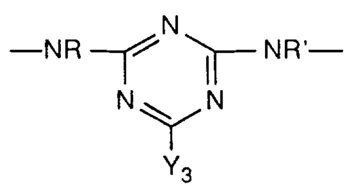

ist, wobei R und R' Wasserstoff oder gegebenenfalls substituiertes $C_1$-$C_8$-Alkyl und $Y_3$ Hydroxy, $C_1$-$C_4$-Alkoxy, Chlor, Brom, $C_1$-$C_4$-Alkylthio, Amino, unsubstituiertes oder im Alkylteil durch Hydroxy, Sulfo, Carboxy oder $C_1$-$C_4$-Alkoxy substituiertes N-Mono- oder N,N-Di-$C_1$-$C_4$-Alkylamino, Cyclohexylamino, unsubstituiertes oder im Phenylteil durch $C_1$-$C_4$-Alkyl, $C_1$-$C_4$-Alkoxy, Carboxy, Sulfo und/oder Halogen substituiertes Phenylamino oder N-$C_1$-$C_4$-Alkyl-N-phenylamino, Morpholino oder 3-Carboxy- oder 3-Carbamoylpyridin-1-yl bedeuten,

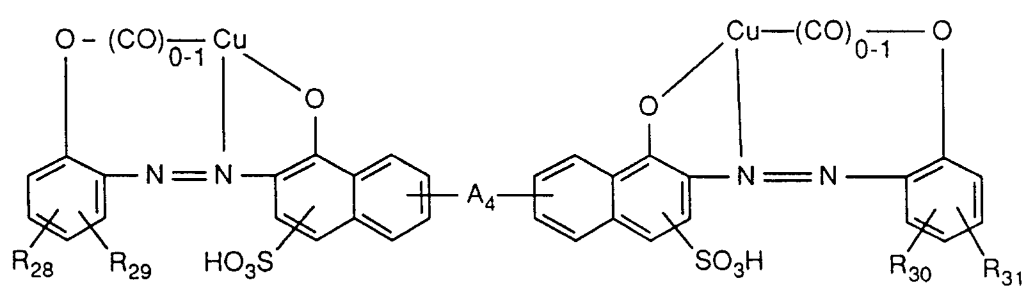

(13),

worin $R_{28}$, $R_{29}$, $R_{30}$ und $R_{31}$ Wasserstoff, gegebenenfalls substituiertes $C_1$-$C_8$-Alkyl oder $C_1$-$C_8$-Alkoxy, Halogen, Carboxy, Sulfo, Ureido, Sulfamoyl oder gegebenenfalls im Alkylteil substituiertes $C_2$-$C_6$-Alkanoylamino sind und $A_4$ die oben unter Formel (12) für $A_3$ angegebenen Bedeutungen hat,

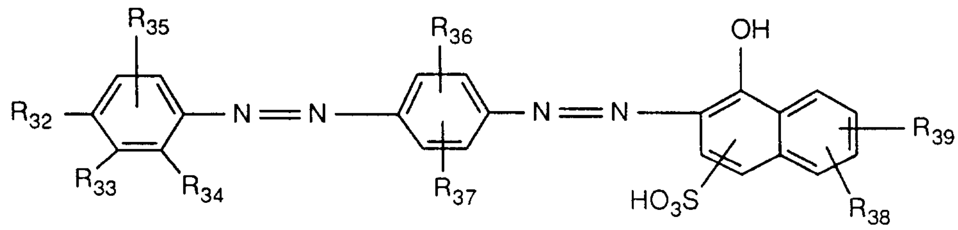

(14),

worin $R_{32}$, $R_{33}$, $R_{34}$, $R_{35}$, $R_{36}$, $R_{37}$ und $R_{38}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino sind und $R_{39}$ gegebenenfalls im Phenylring substituiertes Benzoylamino oder ein gegebenenfalls im Phenylring weitersubstituierter Rest der Formel

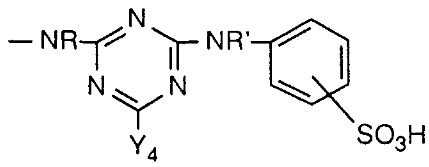

ist, wobei R und R' Wasserstoff oder gegebenenfalls substituiertes $C_1$-$C_8$-Alkyl und $Y_4$ die oben unter Formel (12) für $Y_3$ angegebenen Bedeutungen hat,

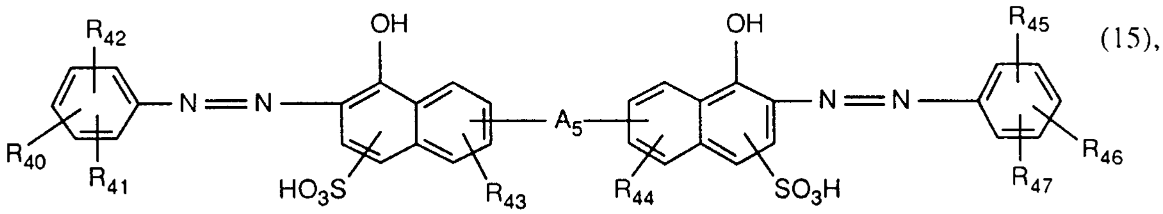

(15),

worin $R_{40}$, $R_{41}$, $R_{42}$, $R_{43}$, $R_{44}$, $R_{45}$, $R_{46}$ und $R_{47}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino sind, wobei $R_{40}$ und $R_{46}$ zusätzlich gegebenenfalls im Phenylring substituiertes Phenylazo bedeuten können, und $A_5$ die oben unter Formel (12) für $A_3$ angegebenen Bedeutungen hat oder ein Rest der Formel

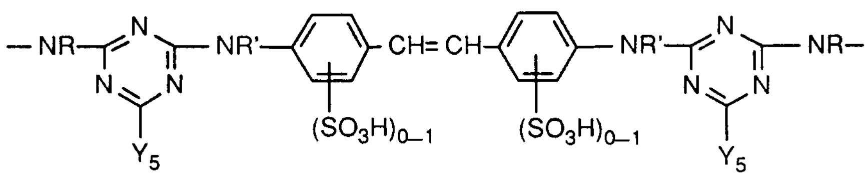

ist, wobei R und R' Wasserstoff oder gegebenenfalls substituiertes $C_1$-$C_8$-Alkyl sind und $Y_5$ die oben unter Formel (12) für $Y_3$ angegebenen Bedeutungen hat,

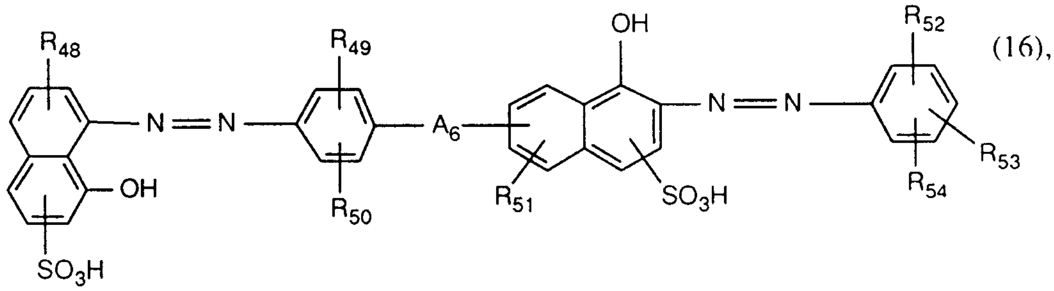

(16),

worin $R_{48}$, $R_{49}$, $R_{50}$, $R_{51}$, $R_{52}$, $R_{53}$ und $R_{54}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten und $A_6$ die oben unter Formel (12) für $A_3$ angegebenen Bedeutungen hat.

Als Halogen kommen für $R_{22}$, $R_{23}$, $R_{24}$, $R_{25}$, $R_{26}$ und $R_{27}$ in der Formel (12), $R_{28}$, $R_{29}$, $R_{30}$ und $R_{31}$ in Formel (13), $R_{32}$, $R_{33}$, $R_{34}$, $R_{35}$, $R_{36}$, $R_{37}$ und $R_{38}$ in Formel (14), $R_{40}$, $R_{41}$, $R_{42}$, $R_{43}$, $R_{44}$, $R_{45}$, $R_{46}$ und $R_{47}$ in Formel (15) und $R_{48}$, $R_{49}$, $R_{50}$, $R_{51}$, $R_{52}$, $R_{53}$ und $R_{54}$ in Formel (16) unabhängig voneinander z.B. Fluor, Brom oder insbesondere Chlor in Betracht.

Als gegebenenfalls substituiertes $C_1$-$C_8$-Alkyl kommt für die oben genannten Substituenten der Farbstoffe der Formeln (12) bis (16) sowie für R und R' insbesondere $C_1$-$C_4$-Alkyl, wie Methyl, Äthyl, Propyl, Isopropyl, Butyl, sek.-Butyl, tert.-Butyl oder Isobutyl, sowie die z.B. durch $C_1$-$C_4$-Alkoxy, $C_1$-$C_4$-Alkoxycarbonyl, Hydroxy, Halogen, wie z.B. Chlor oder Fluor, Carboxy, Cyan, Sulfo oder Sulfato substituierten Reste in Betracht.

Vorzugsweise haben R und R' die gleichen Bedeutungen. Bevorzugt sind R und R' Wasserstoff oder $C_1$-$C_4$-Alkyl, insbesondere Wasserstoff.

Als gegebenenfalls substituiertes $C_1$-$C_8$-Alkoxy kommt für die oben genannten Substituenten der Farbstoffe der Formeln (12) bis (16) insbesondere $C_1$-$C_4$-Alkoxy, wie Methoxy, Äthoxy, Propoxy, Isopropoxy, Butoxy, sek.-Butoxy, Isobutoxy oder tert.-Butoxy, sowie die z.B. durch Hydroxy oder Carboxy substituierten Reste in Betracht.

Als $C_2$-$C_6$-Alkanoylamino kommt für die oben genannten Substituenten der Farbstoffe der Formeln (12) bis (16) insbesondere $C_2$-$C_4$-Alkanoylamino, wie z.B. Acetylamino oder Propionylamino, in Betracht. Als im Alkylteil substituiertes $C_2$-$C_6$-Alkanoylamino kommen z.B die durch Hydroxy substituierten Reste in Betracht.

$R_{39}$ in der Bedeutung als Benzoylamino oder als Rest der Formel

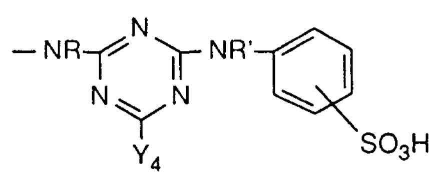

sowie $R_{40}$ und $R_{46}$ in der Bedeutung als Phenylazo können unsubstituiert oder im Phenylring substituiert sein. Als Beispiele für Substituenten seien Halogen, Amino, Sulfo, Carboxy, Ureido, gegebenenfalls im Alkylteil durch Hydroxy weitersubstituiertes $C_2$-$C_4$-Alkanoylamino, $C_1$-$C_4$-Alkyl, gegebenenfalls durch Hydroxy weitersubstituiertes $C_1$-$C_4$-Alkoxy sowie gegebenenfalls im Phenylring durch Carboxy, Halogen, Sulfo, $C_1$-$C_4$-Alkyl oder $C_1$-$C_4$-Alkoxy weitersubstituiertes Benzoylamino oder Phenylamino, insbesondere Halogen, Sulfo oder $C_1$-$C_4$-Alkyl, genannt.

Beispiele für Substituenten $Y_3$, $Y_4$ und $Y_5$ sind Hydroxy, Methoxy, Ethoxy, n- oder iso-Propoxy, Chlor, Methylthio, Ethylthio, Amino, Methylamino, Ethylamino, Carboxymethylamino, β-Hydroxyethylamino, N,N-Di-β-hydroxyethylamino, β-Sulfoethylamino, Phenylamino, o-, m- oder p-Methylphenylamino, o-, m- oder p-Methoxyphenylamino, o-, m- oder p-Chlorphenylamino, o-, m- oder p-Sulfophenylamino, 2,4- oder 2,5-Disulfophenylamino, o-Carboxyphenylamino, N-Ethyl-N-phenylamino, N-Methyl-N-phenylamino und Morpholino.

Bevorzugt sind $Y_3$, $Y_4$ und $Y_5$ unabhängig voneinander Chlor, Amino, unsubstituiertes oder im Alkylteil durch Hydroxy substituiertes N-Mono- oder N,N-Di-$C_1$-$C_4$-Alkylamino, Phenylamino oder Morpholino, insbesondere Morpholino oder Chlor.

Als rotfärbende Farbstoffe verwendet man für das erfindungsgemässe Verfahren bevorzugt mindestens einen Farbstoff der Formeln

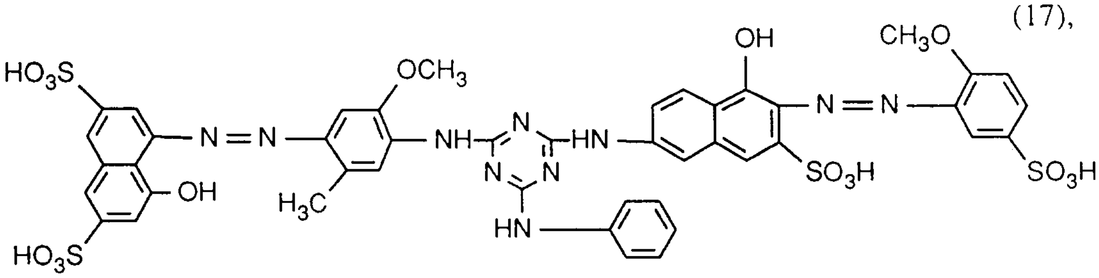

(17),

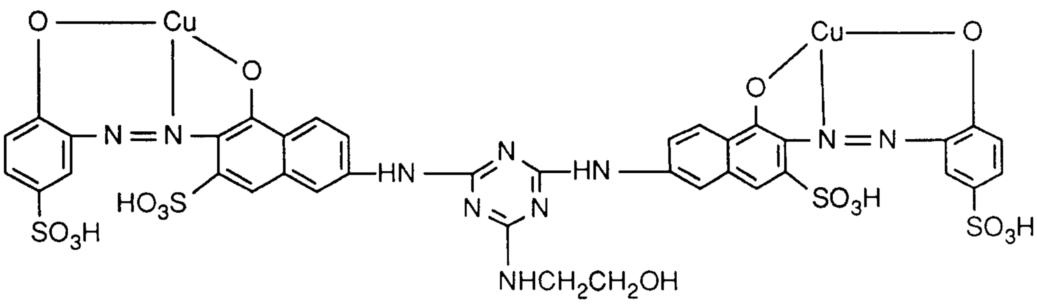

(18),

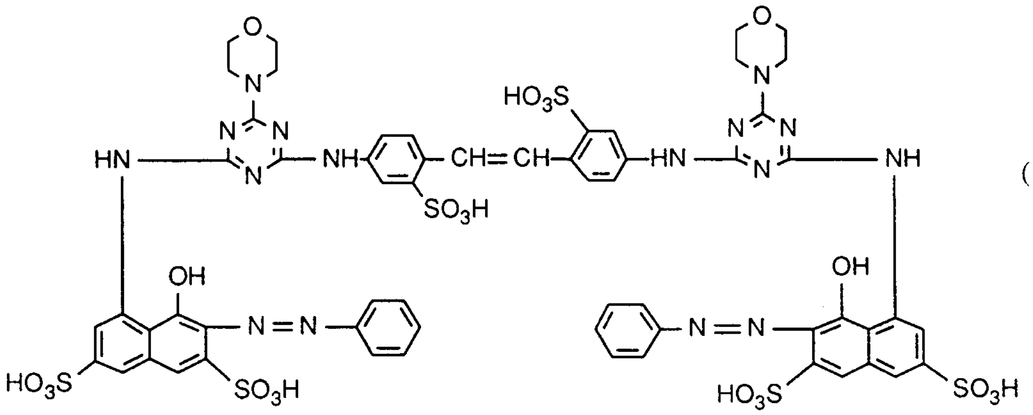

(19),

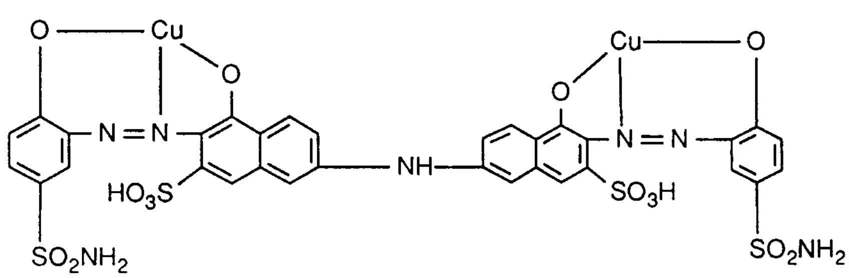

(20)

und

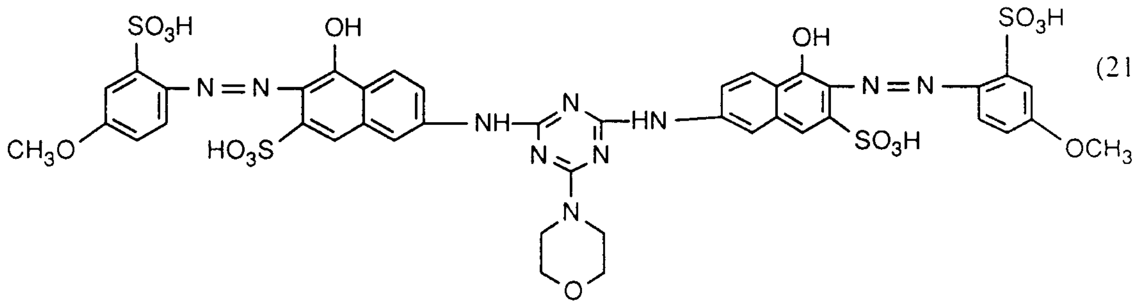

(21),

insbesondere einen Farbstoff der Formel (17).

Besonders bevorzugt verwendet man mindestens einen gelb- oder orangefärbenden Farbstoff der Formel (1) zusammen mit mindestens einem blaufärbenden Farbstoff der Formeln (5) bis (7) und/oder mindestens einem rotfärbenden Farbstoff der Formeln (12) bis (16), wobei als blaufärbende Farbstoffe die der Formeln (5) und (7) und als rotfärbende Farbstoffe die der Formeln (13), (15) und (16) von besonderem Interesse sind.

Ganz besonders bevorzugt verwendet man in dem erfindungsgemässen Verfahren mindestens einen gelb- oder orangefärbenden Farbstoff der Formel (1), insbesondere einen gelb- oder orangefärbenden Farbstoff der Formel (4), zusammen mit mindestens einem blaufärbenden Farbstoff der Formeln (8), (9), (10), (11) und (11a) und/oder mindestens einem rotfärbenden Farbstoff der Formeln (17) bis (21), wobei als blaufärbender Farbstoff vorzugsweise der Farbstoff der Formel (8) und als rotfärbender Farbstoff vorzugsweise der Farbstoff der Formel (17) in Betracht kommt.

In einer besonders wichtigen Ausführungsform des erfindungsgemässen Verfahrens verwendet man einen gelb- oder orangefärbenden Farbstoff der Formel (4) zusammen mit einem blaufärbenden Farbstoff der Formel (8) und/oder einem rotfärbenden Farbstoff der Formel (17).

Das Verfahren der vorliegenden Erfindung ist insbesondere zum Trichromie-Färben oder Bedrücken geeignet, wobei man mindestens einen gelb- oder orangefärbenden Farbstoff der Formel (1) zusammen mit mindestens einem blaufärbenden und mindestens einen, rotfärbenden Farbstoff verwendet. Für die zum Trichromie-Färben oder Bedrucken zu verwendenden Farbstoffe gelten hierbei die zuvor angegebenen Bedeutungen und Bevorzugungen.

Unter Trichromie ist dabei die additive Farbmischung von passend gewählten gelb- oder orange-, rot- und blaufärbenden Farbstoffen in den zur Erzielung der gewünschten Nuance notwendigen Mengen zu verstehen.

Die für das erfindungsgemässe Verfahren verwendeten gelb- oder orangefärbenden Farbstoffe der Formel (1) sowie die blaufärbenden Farbstoffe der Formeln (5) bis (7) und die rotfärbenden Farbstoffe der Formeln (12) bis (16) sind bekannt oder können in Analogie zu bekannten Farbstoffen hergestellt werden.

Bezüglich ihrer färberischen Eigenschaften können die für das erfindungsgemässe Verfahren verwendeten gelb- oder orangefärbenden Farbstoffe der Formel (1) sowie die blaufärbenden Farbstoffe der Formeln (5) bis (7) und die rotfärbenden Farbstoffe der Formeln (12) bis (16) als direktziehende oder Direktfarbstoffe (C.I. direct dyes) bezeichnet werden.

Die für das erfindungsgemässe Verfahren verwendeten gelb- oder orangefärbenden Farbstoffe der Formel (1), die blaufärbenden und die rotfärbenden Farbstoffe liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Kalium-, Lithium- oder Ammoniumsalze oder das Salz des Triäthanolamins genannt.

Für das erfindungsgemässe Verfahren können die Mengen, in denen die gelb- oder orangefärbenden Farbstoffe der Formel (1), die blaufärbenden und die rotfärbenden Farbstoffe in den Färbebädern oder Druckpasten verwendet werden, je nach der gewünschten Farbtiefe schwanken, im allgemeinen haben sich Mengen von 0,01 bis 10 Gewichtsprozent, insbesondere 0,1 bis 6 Gewichtsprozent, bezogen auf das Färbegut, als vorteilhaft erwiesen.

Als hydroxylgruppenhaltige Fasermaterialien, insbesondere textile Fasermaterialien, welche gemäss dem erfindungsgemässen Verfahren gefärbt oder bedruckt werden können, kommen z.B. solche aus cellulosischen Fasern, wie z.B. Baumwolle, Leinen oder Hanf, insbesondere Baumwolle, oder Celluloseregeneratfasern, wie z.B. Zellwolle, Rayon oder Viscose, in Betracht.

Unter hydroxylgruppenhaltigen Fasermaterialien werden ebenfalls solche Fasermaterialien enthaltende Mischfasern verstanden. Als solche kommen z.B. Mischfasern, welche neben cellulosischen Fasematerialien noch natürliche oder synthetische Polyamidfasermaterialien oder Polyacryl- oder Polyesterfasermaterialien enthalten, in Betracht. Als Beispiele seien Wolle/Baumwoll-, Polyamid/Baumwoll-, Polyacryl/Baumwoll- oder insbesondere Polyester/Baumwoll-Mischfasern genannt.

Die textilen Fasermaterialien können in den verschiedensten Verarbeitungszuständen vorliegen, wie z.B. als Faser, Garn, Gewebe oder Gewirke.

Das erfindungsgemässe Verfahren eignet sich zum Färben, z.B. nach der Ausziehmethode oder der Foulardmethode, sowie zum Bedrucken gemäss den allgemein üblichen hierzu verwendeten Verfahren.

Bevorzugt ist das Färben nach der Ausziehmethode. Das Färben erfolgt hierbei in der Regel bei einer Temperatur von 60 bis 110°C, insbesondere 90 bis 105°C, bei einem pH-Wert von z.B. 6 bis 10, insbesondere 7 bis 9, vorzugsweise aus wässriger Flotte bei einem Flottenverhältnis von 1:5 bis 1:80, insbesondere 1:10 bis 1:20.

In einer besonders interessanten Ausführungsform des erfindungsgemässen Verfahrens erfolgt das Färben in Gegenwart eines Salzes, wie z.B. in Gegenwart eines Alkalihalogenids, insbesondere eines Alkalichlorids, oder eines Alkalisulfats. Hierbei wird insbesondere ein Teil der Salzmenge zu Beginn des Färbeprozesses zugegeben und ein weiterer Teil kurz vor oder nach Erreichung der Färbetemperatur als ganzes oder portionsweise zugegeben. Die zu Beginn des Färbeprozesses zugegebene Salzmenge beträgt in der Regel 5 bis 40% der insgesamt während des Färbeprozesses zugegebenen Salzmenge. Die kurz vor oder nach Erreichung der Färbetemperatur zugegebene Salzmenge beträgt somit 60 bis 95% der insgesamt während des Färbeprozesses zugegebenen Salzmenge. Als Bereich kurz vor Erreichung der Färbetemperatur ist beispielsweise der Bereich des Aufheizens zur Erreichung der Färbetemperatur zu verstehen, wie z.B. der Bereich der Temperatur von 80 bis 98°C. Vorzugsweise wird das Salz hierbei direkt bei Erreichung der Färbetemperatur zugegeben. Die Verwendung einer von der Gesamtmenge der eingesetzten Farbstoffe abhängenden Gesamtmenge an Salz hat sich für diese Ausführungsform des erfindungsgemässen Verfahrens als vorteilhaft erwiesen. Hierbei wird in der Regel eine mit der Gesamtmenge der eingesetzten Farbstoffe zunehmende Gesamtmenge an Salz verwendet. Bis zu einer Gesamtmenge an Farbstoff von 1% werden hierbei z.B. 6 bis 12 g/l Salz verwendet, bei einer Gesamtmenge an Farbstoff von 1% bis 2% werden z.B. 12 bis 20 g/l Salz und oberhalb einer Gesamtmenge an Farbstoff von 2% werden beispielsweise 20 bis 40 g/l Salz verwendet. Die Mengenangaben der Farbstoffe sind hierbei Gewichtsprozente, bezogen auf das eingesetzte Fasermaterial, und entsprechen in der Regel den Farbstoffen, wie sie nach der Synthese, z.B. durch Aussalzen, erhalten werden.

Für diese Ausführungsform des erfindungsgemässen Verfahrens ist das Färben nach der Ausziehmethode bevorzugt.

Ebenfalls können Fasermaterialien, insbesondere textile Fasermaterialien, aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

So können Fasergemische aus Synthesefasern und cellulosischen Fasermaterialien, insbesondere Polyester/Baumwoll-Mischgewebe, in Gegenwart eines Dispersionsfarbstoffes für die Synthesefasern unter den Färbebedingungen für die Synthesefasern gefärbt werden. Als Synthesefasern kommen insbesondere Polyesterfasern in Betracht. Falls gemäss dieser Ausführungsform in Gegenwart von Salzen, wie z.B. einem Alkalihalogenid oder einem Alkalisulfat, gefärbt wird, so ist die Zugabe der Gesamtmenge des Salzes zu Beginn des Färbeprozesses bevorzugt.

Die für das erfindungsgemässe Verfahren verwendeten Farbstoffe sind gut mit anderen Farbstoffen, insbesondere Dispersionsfarbstoffen kombinierbar. Die für das erfindungsgemässe Verfahren verwendeten Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 120 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den für das erfindungsgemässe Verfahren verwendeten Farbstoffen in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie das für das erfindungsgemässe Verfahren verwendete Farbstoffgemisch sie aufweist, so ist es auch möglich, Ton-in-Ton-Färbungen zu erhalten.

Gemäss dieser Ausführungsform des erfindungsgemässen Verfahrens kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die für das erfindungsgemässe Verfahren verwendeten Farbstoffe zeichnen sich durch gleichmässigem Farbaufbau bei gleichzeitiger Nuancenkonstanz in verschiedenen Konzentrationen und einer guten Kombinierbarkeit aus. Es werden Färbungen und Drucke mit guter Faser- und Flächenegalität und guten Allgemeinechtheiten, insbesondere guten Reib-, Nass-, Nassreib-, Schweiss- und Lichtechtheiten, erhalten. Sofern nötig, kann man die Nassechtheiten, insbesondere die Waschechtheit, der erhaltenen Färbungen und Drucke durch eine Nachbehandlung mit sog. Fixiermitteln noch wesentlich verbessern. Als Beispiele für geeignete Fixiermittel seien die in der EP-A-250,265 sowie der EP-A-438,380 beschriebenen Fixiermittel genannt.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 12,5 Teile eines nicht mercerisierten Baumwollgewebes werden mit einem Teil eines nichtionogenen Netzmittels bei einer Temperatur von 80 °C eingenetzt. Das so vorbehandelte Baumwollgewebe wird abgequetscht und in eine 40 °C warme Farbstofflösung, welche in deionisiertem Wasser 0,1% des gelbfärbenden Farbstoffs der Formel

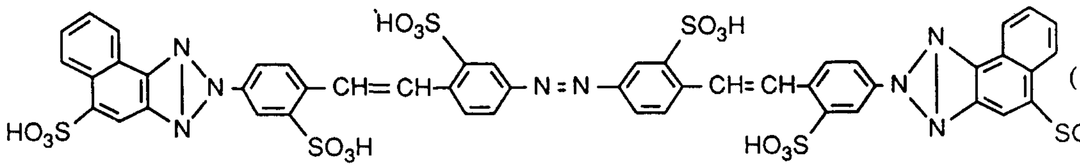
(101),

0,17% des rotfärbenden Farbstoffs der Formel

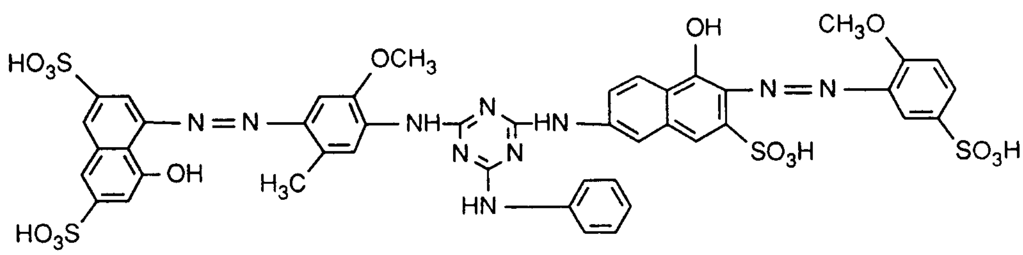
(102)

und 0,13% des blaufärbenden Farbstoffs der Formel

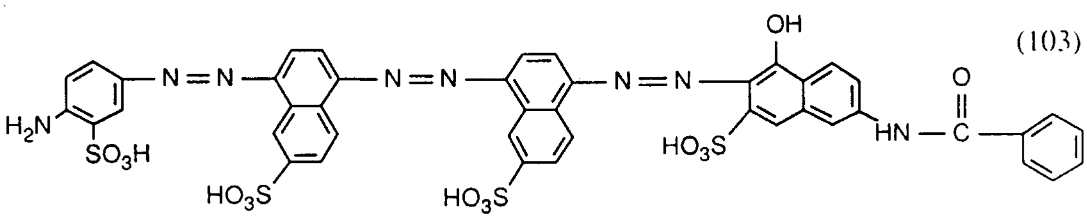
(103)

bezogen auf das Gewicht des Baumwollgewebes enthält, bei einem Flottenverhältnis von 1:10 eingetragen. Man belässt das Färbebad 5 Minuten bei einer Temperatur von 40 °C. gibt dann 1,2 g/l Natriumsulfat zu und erhöht nach weiteren 5 Minuten die Temperatur des Färbebades mit einer Aufheizrate von 1,5 °C/Minute auf Kochtemperatur. Bei Erreichen der Kochtemperatur werden 4,8 g/l Natriumsulfat zugegeben und man hält das Färbebad 45 Minuten bei einer Temperatur von ca. 98 °C. Anschliessend wird mit einer Abkühlrate von 1 °C/Minute auf eine Temperatur von ca. 80 bis 85 °C abgekühlt und das Färbebad 15 Minuten bei dieser Temperatur belassen. Anschliessend wird das gefärbte Baumwollgewebe aus dem Bad herausgenommen, bei Raumtemperatur zweimal je 5 Minuten mit Wasser gespült, abgequetscht und bei einer Temperatur von ca. 80 bis 90 °C im Trockenschrank getrocknet. Man erhält ein in einer graubraunen Nuance egal gefärbtes Baumwollgewebe, welches gute

Allgemeinechtheiten aufweist. Zur Verbesserung der Nassechtheiten, insbesondere der Waschechtheit, kann das erhaltene Baumwollgewebe mit kationischen Fixiermitteln nachbehandelt werden.

Beispiele 2 bis 20: Verfährt man wie in Beispiel 1 angegeben, verwendet jedoch anstelle von 0,1% des gelbfärbenden Farbstoffs der Formel (101), 0,17% des rotfärbenden Farbstoffs der Formel (102) und 0,13% des blaufärbenden Farbstoffs der Formel (103) die in der folgenden Tabelle in Spalte 2 angegebenen Farbstoffe in den aufgeführten Mengen, anstelle von 1,2 g/l Natriumsulfat die in Spalte 3 angegebene Natriumsulfatmenge A und anstelle von 4,8 g/l Natriumsulfat die in Spalte 4 angegebene Natriumsulfatmenge B, so erhält man ein in der in Spalte 5 angegebenen Nuance gefärbtes Baumwollgewebe. Die in Spalte 2 angegebenen Farbstoffe der Formeln (104) bis (110) sind im Anschluss an die folgende Tabelle aufgeführt.

<u>Tabelle</u>

| Bsp. | verwendete Farbstoffe | Natriumsulfatmenge A | Natriumsulfatmenge B | Nuance |
|---|---|---|---|---|
| 2 | 0,6% des Farbstoffs der Formel (101)<br>0,42% des Farbstoffs der Formel (103)<br>0,74% des Farbstoffs der Formel (104) | 3,0 g/l | 19,0 g/l | graubraun |
| 3 | 0,54% des Farbstoffs der Formel (101)<br>0,78% des Farbstoffs der Formel (102)<br>0,028% des Farbstoffs der Formel (103) | 1,7 g/l | 15,3 g/l | braunorange |
| 4 | 0,12% des Farbstoffs der Formel (101)<br>1,14% des Farbstoffs der Formel (104)<br>1,51% des Farbstoffs der Formel (105) | 7,5 g/l | 17,5 g/l | rotviolett |
| 5 | 0,258% des Farbstoffs der Formel (101)<br>0,16% des Farbstoffs der Formel (103) | 1,5 g/l | 4,5 g/l | olivgrün |
| 6 | 0,258% des Farbstoffs der Formel (101)<br>0,24% des Farbstoffs der Formel (102) | 1,0 g/l | 7,0 g/l | orange |

| Bsp. | verwendete Farbstoffe | Natriumsulfatmenge A | Natriumsulfatmenge B | Nuance |
|---|---|---|---|---|
| 7 | 0,086% des Farbstoffs der Formel (101)<br>0,12% des Farbstoffs der Formel (102)<br>0,24% des Farbstoffs der Formel (103) | 1,0 g/l | 6,0 g/l | grau |
| 8 | 0,5% des Farbstoffs der Formel (101)<br>0,5% des Farbstoffs der Formel (104)<br>0,5% des Farbstoffs der Formel (105) | 4 g/l | 15 g/l | braunorange |
| 9 | 0,5% des Farbstoffs der Formel (101)<br>0,5% des Farbstoffs der Formel (103)<br>0,5% des Farbstoffs der Formel (105) | 5 g/l | 15 g/l | grüngrau-oliv |
| 10 | 0,5% des Farbstoffs der Formel (101)<br>0,5% des Farbstoffs der Formel (106)<br>0,5% des Farbstoffs der Formel (105) | 6 g/l | 13 g/l | braunviolett |

| Bsp. | verwendete Farbstoffe | | Natriumsulfatmenge A | Natriumsulfatmenge B | Nuance |
|---|---|---|---|---|---|
| 11 | 0,5% | des Farbstoffs der Formel (101) | 7 g/l | 11 g/l | orange |
| | 0,5% | des Farbstoffs der Formel (107) | | | |
| | 0,5% | des Farbstoffs der Formel (105) | | | |
| 12 | 0,5% | des Farbstoffs der Formel (101) | 3,5 g/l | 14,5 g/l | grauoliv |
| | 0,5% | des Farbstoffs der Formel (108) | | | |
| | 0,5% | des Farbstoffs der Formel (105) | | | |
| 13 | 0,5% | des Farbstoffs der Formel (101) | 3 g/l | 16 g/l | grüngrau-oliv |
| | 0,5% | des Farbstoffs der Formel (109) | | | |
| | 0,5% | des Farbstoffs der Formel (105) | | | |
| 14 | 0,5% | des Farbstoffs der Formel (101) | 3,5 g/l | 15 g/l | anthrazit |
| | 0,5% | des Farbstoffs der Formel (104) | | | |
| | 0,5% | des Farbstoffs der Formel (109) | | | |

| Bsp. | verwendete Farbstoffe | | Natriumsulfatmenge A | Natriumsulfatmenge B | Nuance |
|---|---|---|---|---|---|
| 15 | 0,5% | des Farbstoffs der Formel (101) | 4 g/l | 14 g/l | braunorange |
| | 0,5% | des Farbstoffs der Formel (104) | | | |
| | 0,5% | des Farbstoffs der Formel (107) | | | |
| 16 | 0,5% | des Farbstoffs der Formel (101) | 4 g/l | 15 g/l | braunviolett |
| | 0,5% | des Farbstoffs der Formel (104) | | | |
| | 0,5% | des Farbstoffs der Formel (106) | | | |
| 17 | 0,5% | des Farbstoffs der Formel (101) | 5 g/l | 13,5 g/l | braun |
| | 0,5% | des Farbstoffs der Formel (104) | | | |
| | 0,5% | des Farbstoffs der Formel (103) | | | |
| 18 | 0,5% | des Farbstoffs der Formel (101) | 6 g/l | 12 g/l | braun |
| | 0,5% | des Farbstoffs der Formel (104) | | | |
| | 0,5% | des Farbstoffs der Formel (108) | | | |

| Bsp. | verwendete Farbstoffe | | Natriumsulfatmenge A | Natriumsulfatmenge B | Nuance |
|---|---|---|---|---|---|
| 19 | 0,5% | des Farbstoffs der Formel (101) | 3,5 g/l | 15,5 g/l | braun |
| | 0,5% | des Farbstoffs der Formel (104) | | | |
| | 0,5% | des Farbstoffs der Formel (110) | | | |
| 20 | 0,5% | des Farbstoffs der Formel (101) | 4 g/l | 15,5 g/l | rotbraun |
| | 0,5% | des Farbstoffs der Formel (102) | | | |
| | 0,5% | des Farbstoffs der Formel (110) | | | |

Auflistung der in der obigen Tabelle angegebenen Farbstoffe der Formeln (104) bis (110):

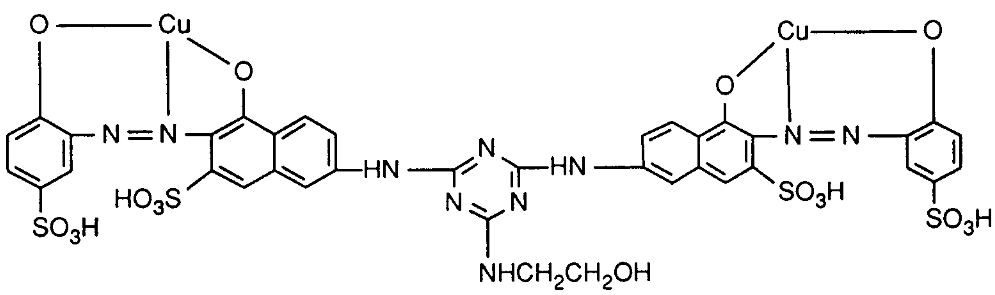

(104)

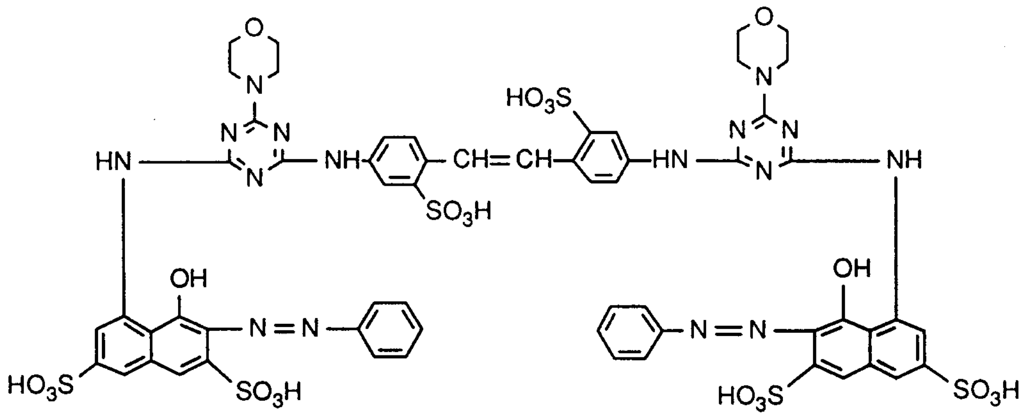

(105)

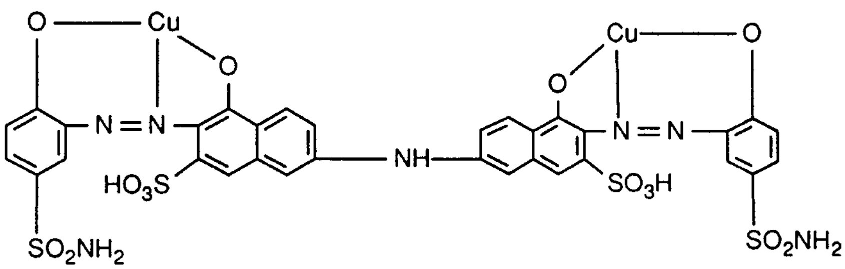

(106)

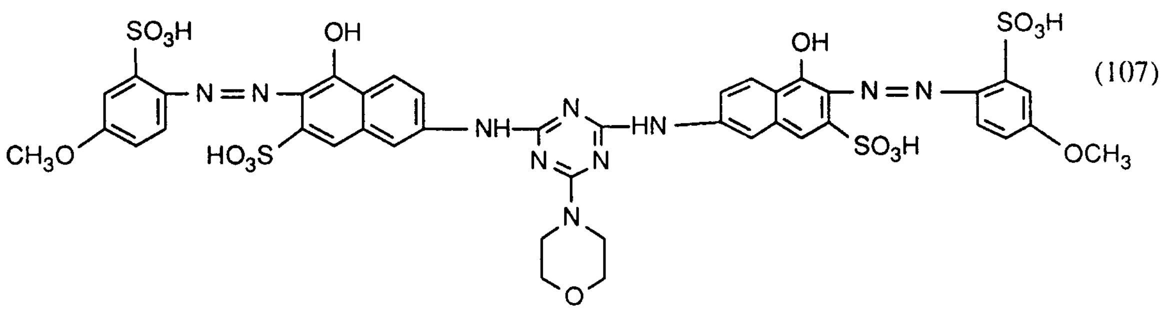

(107)

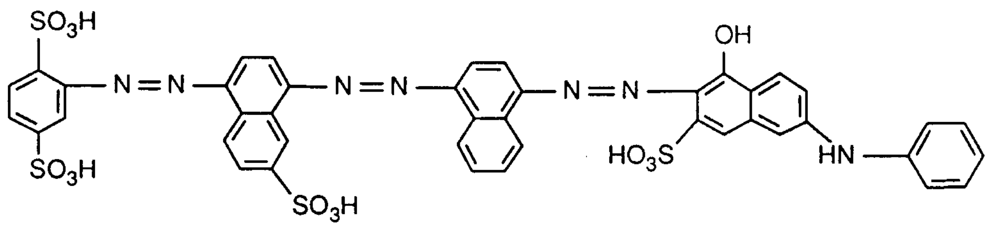

(108)

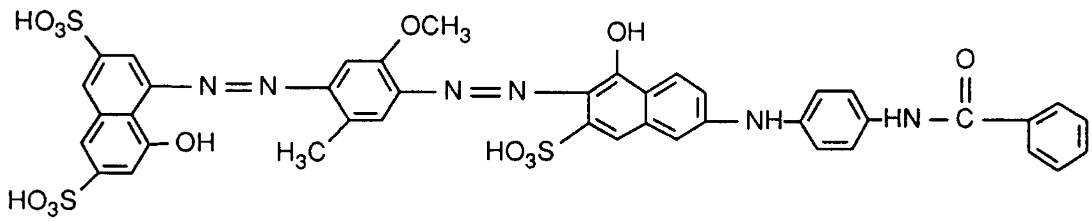

(109)

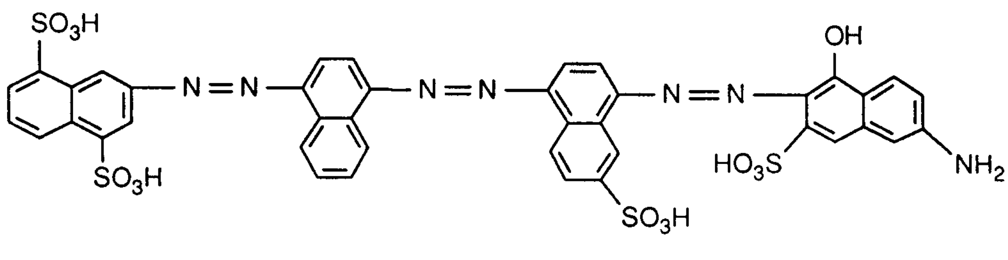

(110)

Beispiel 21: 250,8 Teile gut eingenetzter Polyester/Baumwolle Maschenware, welche auf 100 Teile 30 Teile Polyester und 70 Teile Baumwolle enthält, werden bei einer Temperatur von 60 °C in eine Hochtemperatur-Jetfärbeapparatur gegeben. Das Flottenverhältnis beträgt 1:7. Anschliessend werden dem Färbebad folgende Hilfsmittel zugesetzt:

0,75 g/l eines handelsüblichen Gleitmittels (Oxyalkylen-Polyesterkondensat-Typ),
0,3 g/l eines silikonfreien Penetrationsbeschleunigers auf Maleinsäureesterbasis,
1 g/l eines Egalisierhilfsmittels (Ammoniumsalz eines säuremodifizierten Polyhydroxyalkylenglykoläthers),
2 g/l Mononatriumdihydrogenphosphat-Puffer,
2 g/l Natrium-m-nitrobenzolsulfonat und
10 g/l Natriumsulfat.

Nun wird der pH mit Essigsäure auf einen Wert von 5 gestellt. Die Färbeflotte wird 5 Minuten bei einer Temperatur von 60 °C belassen und anschliessend wird eine Farbstoffmischung, die 0,74 Teile des Farbstoffs der Formel (101), 0,45 Teile des Farbstoffs der Formel (102), 0,48 Teile des Farbstoffs der Formel (103), 0,21 Teile eines gelbfärbenden Dispersionsfarbstoffes der Formel

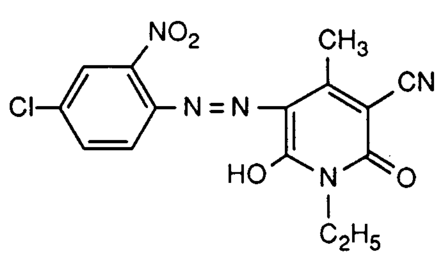

(111),

0,19 Teile eines rotfärbenden Dispersionsfarbstoffes der Formel

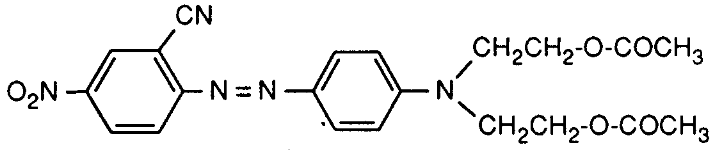

(112)

und 0,17 Teile eines blaufärbenden Dispersionsfarbstoffes der Formel

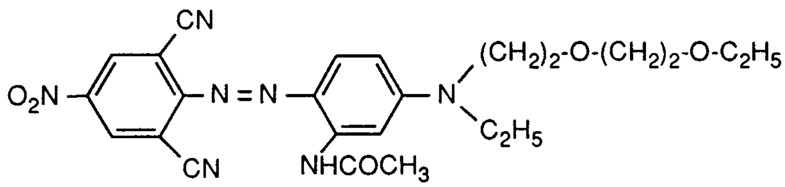

(113)

enthält, dem Färbebad zugegeben. Dann wird das Färbebad mit einer Aufheizrate von 2 °C/Minute auf eine Temperatur von 130 °C erhitzt, diese Temperatur 30 Minuten gehalten und anschliessend wird mit einer Abkühlrate von 1,5 °C/Minute auf eine Temperatur von 80 °C abgekühlt. Das Färbebad wird 15 Minuten bei der Temperatur von 80 °C belasssen. Nun wird das Färbebad abgelassen und das gefärbte Material zweimal je 5 Minuten mit 30 °C warmem Wasser gewaschen. Zur Fertigstellung der Färbung wird das Färbegut in üblicher Weise getrocknet oder mit einem kationischen Nachbehandlungsmittel veredelt. Als Nachbehandlungsmittel kommen z.B. solche auf der Basis von polymerisierten quarternären Diallylammoniumverbindungen in Betracht, wie z.B. die in der EP-A-438 380 angegebenen. Das erhaltene Färbegut weist eine hellolivbraune Färbung von ausgezeichneter Egalität auf.

## Patentansprüche

1. Verfahren zum Färben oder Bedrucken von hydroxylgruppenhaltigen Fasermaterialien, dadurch gekennzeichnet, dass man mindestens einen gelb- oder orangefärbenden Farbstoff der Formel

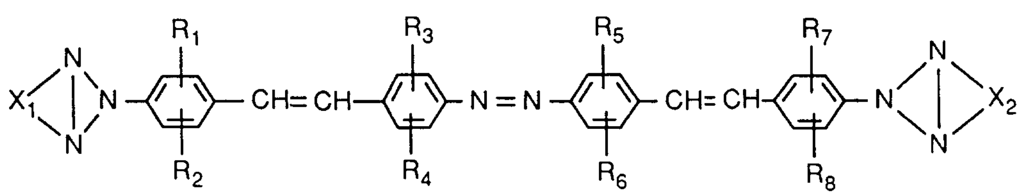

(1),

worin $X_1$ und $X_2$ jeweils ein Rest der Naphthalinreihe sind und $R_1$, $R_2$, $R_3$, $R_4$, $R_5$, $R_6$, $R_7$ und $R_8$ Wasserstoff, $C_1$-$C_8$-Alkyl, $C_1$-$C_8$-Alkoxy, Halogen, Carboxy, Sulfo, Ureido oder gegebenenfalls im Alkylteil substituiertes $C_2$-$C_6$-Alkanoylamino bedeuten, zusammen mit mindestens einem blaufärbenden und/oder mindestens einem rotfärbenden Farbstoff verwendet.

2. Verfahren zum Trichromie-Färben oder Bedrucken gemäss Anspruch 1, dadurch gekennzeichnet, dass man mindestens einen gelb- oder orangefärbenden Farbstoff der Formel (1) gemäss Anspruch 1 zusammen mit mindestens einem blaufärbenden und mindestens einem rotfärbenden Farbstoff verwendet.

3. Verfahren gemäss einem der Ansprüche 1 und 2, dadurch gekennzeichnet, dass $R_1$, $R_2$, $R_3$, $R_4$, $R_5$, $R_6$, $R_7$ und $R_8$ Wasserstoff, $C_1$-$C_4$-Alkyl, $C_1$-$C_4$-Alkoxy, $C_2$-$C_4$-Alkanoylamino, Halogen oder Sulfo sind.

4. Verfahren gemäss einem der Ansprüche 1 bis 3, dadurch gekennzeichnet, dass $R_1$, $R_2$, $R_3$, $R_4$, $R_5$, $R_6$, $R_7$ und $R_8$ Wasserstoff oder Sulfo sind.

5. Verfahren gemäss einem der Ansprüche 1 bis 4, dadurch gekennzeichnet, dass $X_1$ und $X_2$ einen unsubstituierten oder durch $C_1$-$C_4$-Alkyl, $C_1$-$C_4$-Alkoxy, Halogen, Carboxy, Sulfo, Ureido oder $C_2$-$C_4$-Alkanoylamino, insbesondere Sulfo, substituierten Naphthalinrest bedeuten.

6. Verfahren gemäss einem der Ansprüche 1 bis 5, dadurch gekennzeichnet, dass man als Farbstoff der Formel (1) einen Farbstoff der Formel

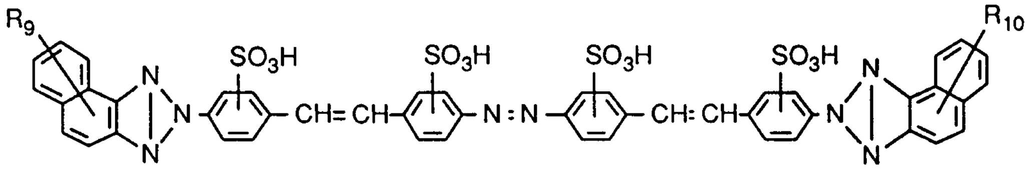

(3)

verwendet, worin $R_9$ und $R_{10}$ Wasserstoff, $C_1$-$C_4$-Alkyl, $C_1$-$C_4$-Alkoxy, $C_2$-$C_4$-Alkanoylamino, Halogen oder Sulfo, insbesondere Wasserstoff oder Sulfo, sind.

**7.** Verfahren gemäss einem der Ansprüche 1 und 2, dadurch gekennzeichnet, dass man als Farbstoff der Formel (1) einen Farbstoff der Formel

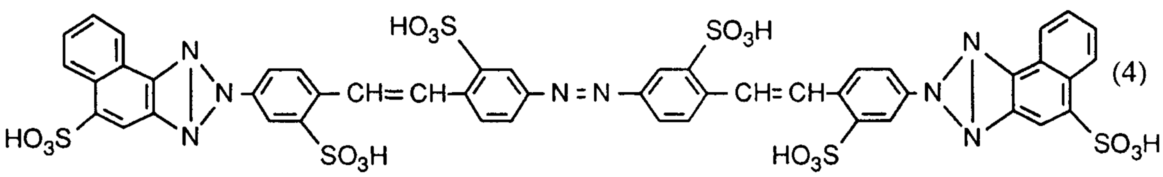

(4)

verwendet.

**8.** Verfahren gemäss einem der Ansprüche 1 bis 7, dadurch gekennzeichnet, dass man als blaufärbenden Farbstoff mindestens einen Farbstoff der Formeln (5), (6) und (7)

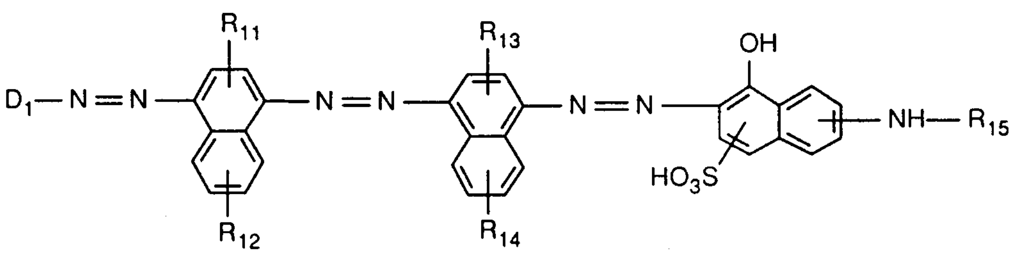

(5),

worin $D_1$ gegebenenfalls substituiertes Phenyl oder Naphthyl, $R_{11}$, $R_{12}$, $R_{13}$ und $R_{14}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten und $R_{15}$ Wasserstoff, gegebenenfalls substituiertes $C_1$-$C_8$-Alkyl, gegebenenfalls im Alkylteil substituiertes $C_2$-$C_6$-Alkanoyl oder gegebenenfalls im Phenylring substituiertes Phenyl oder Benzoyl bedeutet,

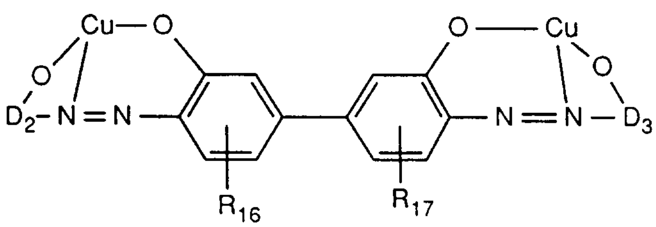

(6),

worin $D_2$ und $D_3$ gegebenenfalls substituiertes Naphthyl und $R_{16}$ und $R_{17}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten,

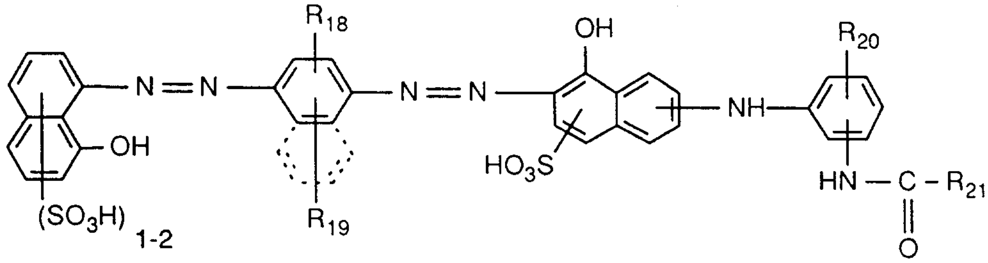

(7),

worin $R_{18}$, $R_{19}$ und $R_{20}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten und $R_{21}$ gegebenenfalls substituiertes $C_1$-$C_8$-Alkyl oder Phenyl ist, verwendet.

**9.** Verfahren gemäss einem der Ansprüche 1 bis 8, dadurch gekennzeichnet, dass man als blaufärbenden Farbstoff mindestens einen Farbstoff der Formeln

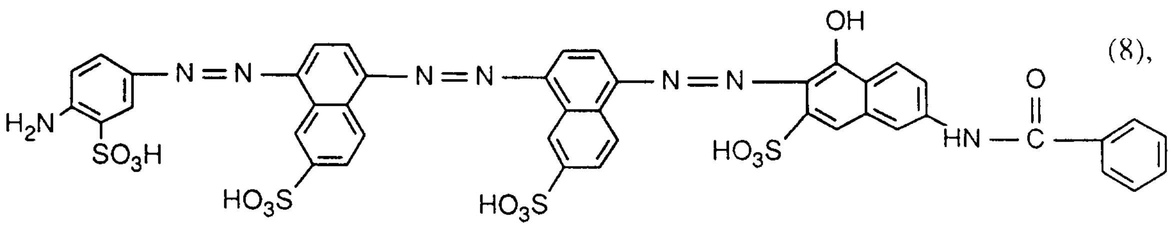

(8),

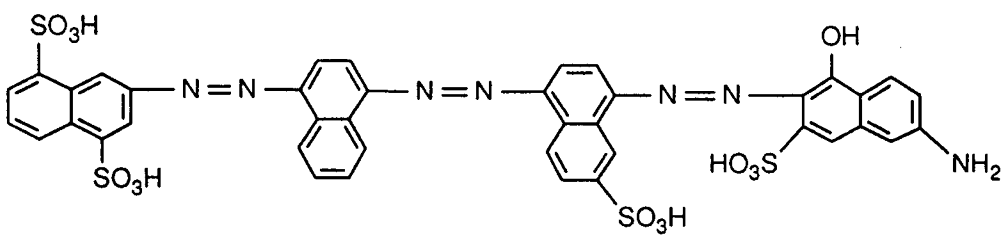

(9),

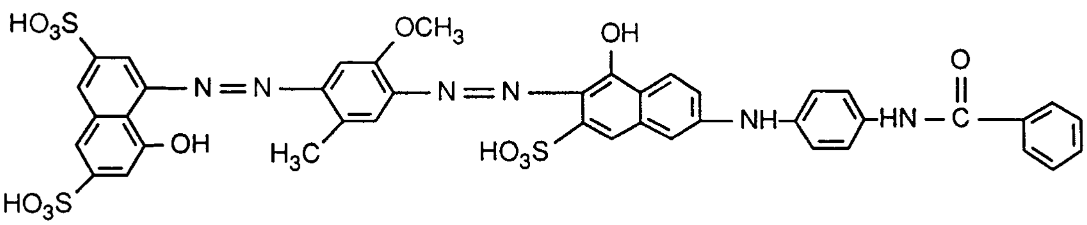

(10),

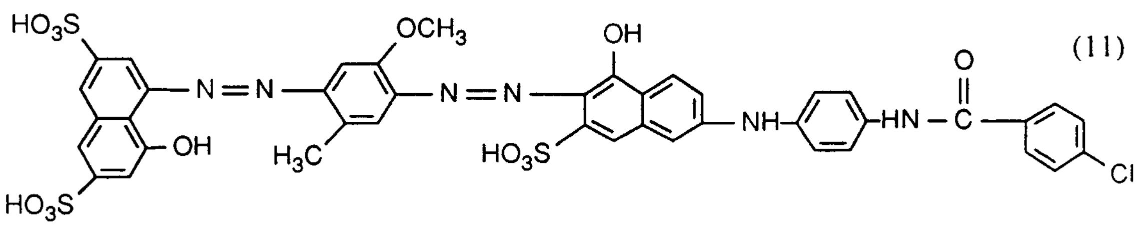

(11)

und

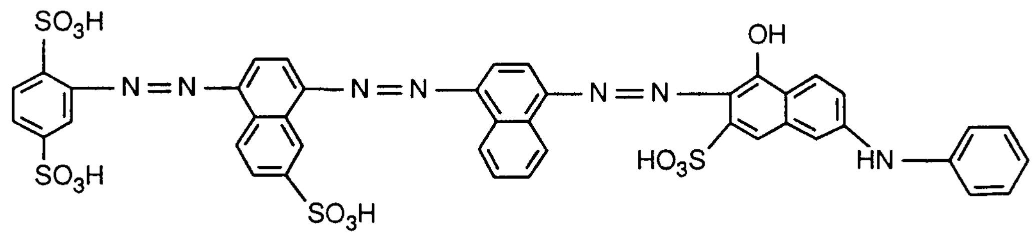

(11a)

verwendet.

**10.** Verfahren gemäss einem der Ansprüche 1 bis 9, dadurch gekennzeichnet, dass man als rotfärbenden Farbstoff mindestens einen Farbstoff der Formeln (12), (13), (14), (15) und (16)

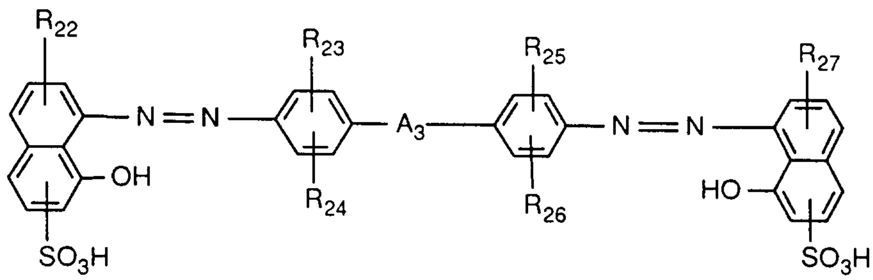

(12),

worin $R_{22}$, $R_{23}$, $R_{24}$, $R_{25}$, $R_{26}$ und $R_{27}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten und $A_3$ ein Rest der Formel

-NH-,

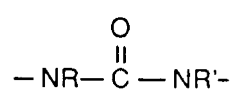

oder

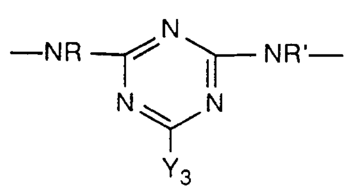

ist, wobei R und R' Wasserstoff oder gegebenenfalls substituiertes $C_1$-$C_8$-Alkyl und $Y_3$ Hydroxy, $C_1$-$C_4$-Alkoxy, Chlor, Brom, $C_1$-$C_4$-Alkylthio, Amino, unsubstituiertes oder im Alkylteil durch Hydroxy, Sulfo, Carboxy oder $C_1$-$C_4$-Alkoxy substituiertes N-Mono- oder N,N-Di-$C_1$-$C_4$-Alkylamino, Cyclohexylamino, unsubstituiertes oder im Phenylteil durch $C_1$-$C_4$-Alkyl, $C_1$-$C_4$-Alkoxy, Carboxy, Sulfo und/oder Halogen substituiertes Phenylamino oder N-$C_1$-$C_4$-Alkyl-N-phenylamino, Morpholino oder 3-Carboxy- oder 3-Carbamoylpyridin-1-yl bedeuten,

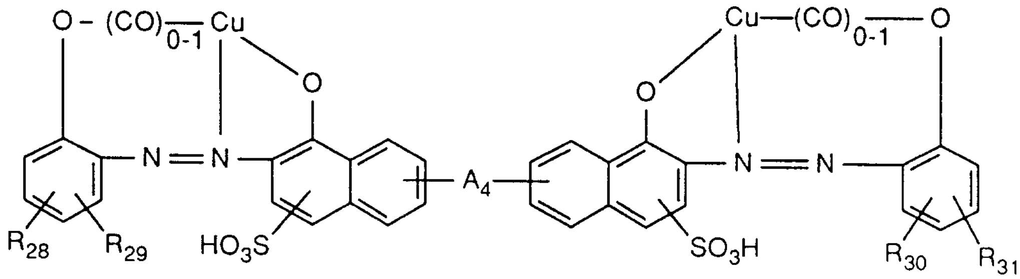

(13),

worin $R_{28}$, $R_{29}$, $R_{30}$ und $R_{31}$ Wasserstoff, gegebenenfalls substituiertes $C_1$-$C_8$-Alkyl oder $C_1$-$C_8$-Alkoxy, Halogen, Carboxy, Sulfo, Ureido, Sulfamoyl oder gegebenenfalls im Alkylteil substituiertes $C_2$-$C_6$-Alkanoylamino sind und $A_4$ die oben unter Formel (12) für $A_3$ angegebenen Bedeutungen hat,

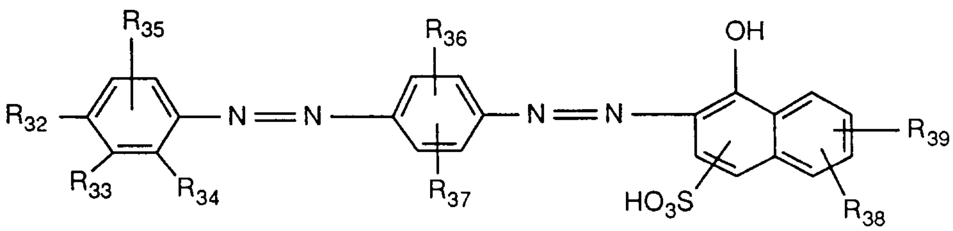

(14),

worin $R_{32}$, $R_{33}$, $R_{34}$, $R_{35}$, $R_{36}$, $R_{37}$ und $R_{38}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino sind und $R_{39}$ gegebenenfalls im Phenylring substituiertes Benzoylamino oder ein gegebenenfalls im Phenylring weitersubstituierter Rest der Formel

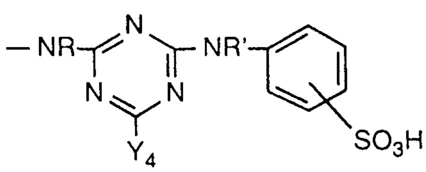

ist, wobei R und R' Wasserstoff oder gegebenenfalls substituiertes $C_1$-$C_8$-Alkyl und $Y_4$ die oben unter Formel (12) für $Y_3$ angegebenen Bedeutungen hat,

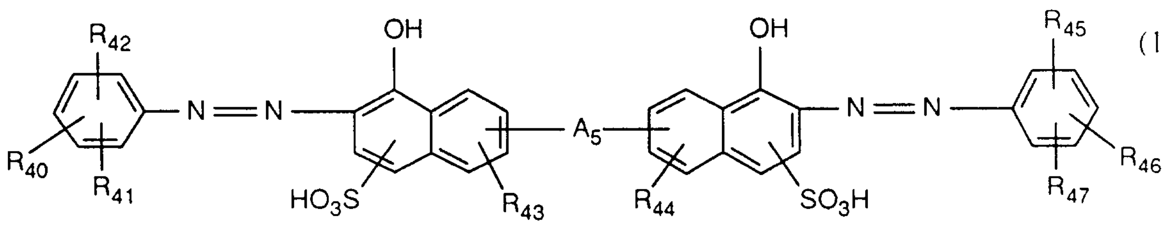

(15),

worin $R_{40}$, $R_{41}$, $R_{42}$, $R_{43}$, $R_{44}$, $R_{45}$, $R_{46}$ und $R_{47}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino sind, wobei $R_{40}$ und $R_{46}$ zusätzlich gegebenenfalls im Phenylring substituiertes Phenylazo bedeuten können, und $A_5$ die oben unter Formel (12) für $A_3$ angegebenen Bedeutungen hat oder ein Rest der Formel

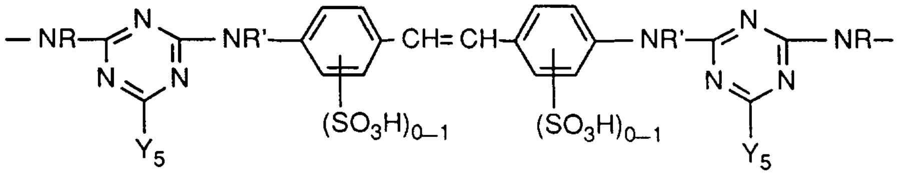

ist, wobei R und R' Wasserstoff oder gegebenenfalls substituiertes $C_1$-$C_8$-Alkyl sind und $Y_5$ die oben unter Formel (12) für $Y_3$ angegebenen Bedeutungen hat,

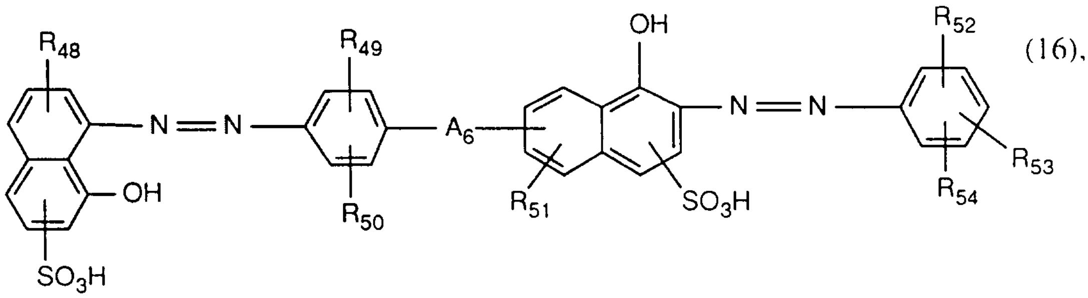

(16),

worin $R_{48}$, $R_{49}$, $R_{50}$, $R_{51}$, $R_{52}$, $R_{53}$ und $R_{54}$ Wasserstoff, gegebenenfalls substituiertes $C_1$-$C_8$-Alkyl oder $C_1$-$C_8$-Alkoxy, Halogen, Carboxy, Sulfo, Ureido oder gegebenenfalls im Alkylteil substituiertes $C_2$-$C_6$-Alkanoylamino bedeuten und $A_6$ die oben unter Formel (12) für $A_3$ angegebenen Bedeutungen hat, verwendet.

**11.** Verfahren gemäss einem der Ansprüche 1 bis 10, dadurch gekennzeichnet dass man als rotfärbenden Farbstoff mindestens einen Farbstoff der Formeln

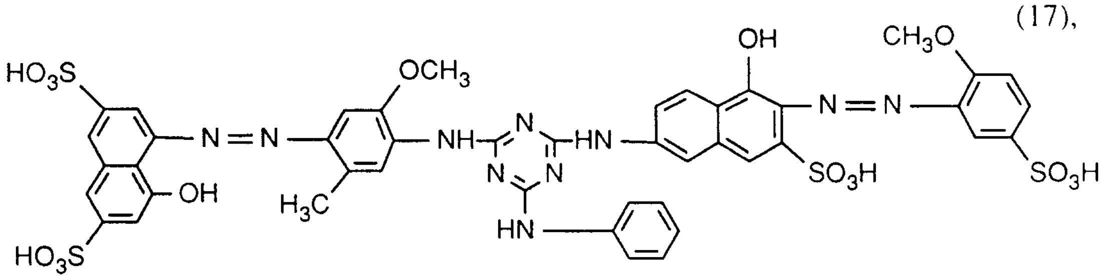

(17),

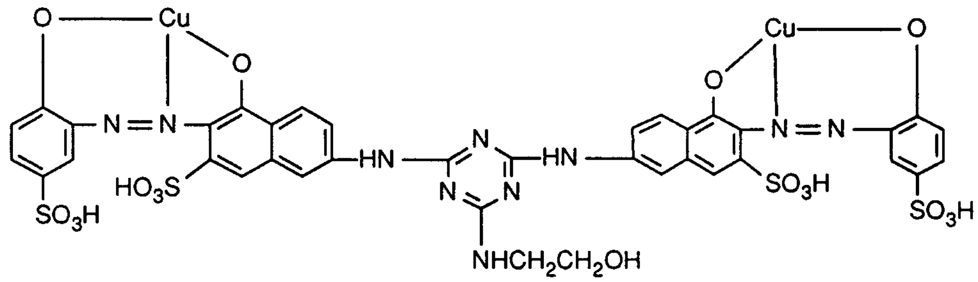

(18),

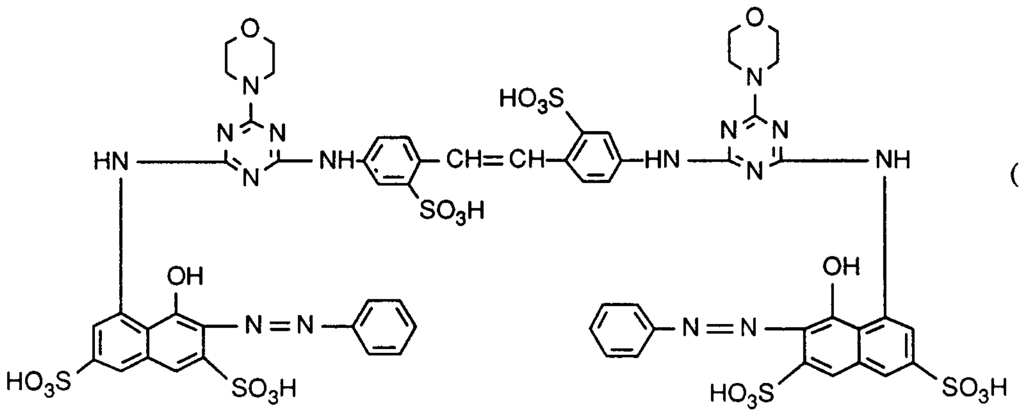

(19),

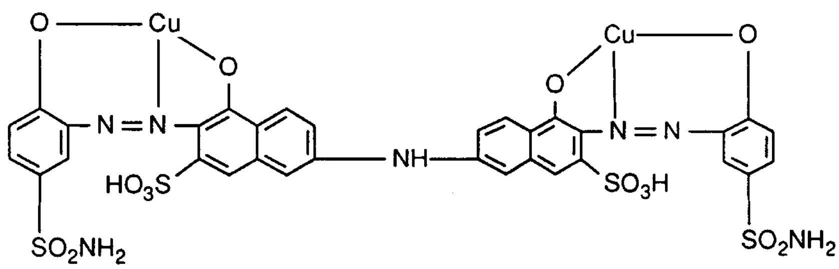

(20)

und

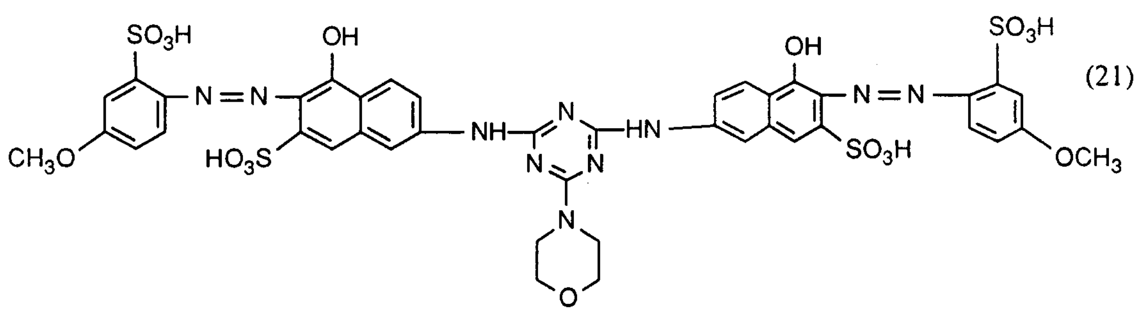

(21)

verwendet.

**12.** Verfahren gemäss Anspruch 2, dadurch gekennzeichnet, dass man einen gelbfärbenden Farbstoff der Formel

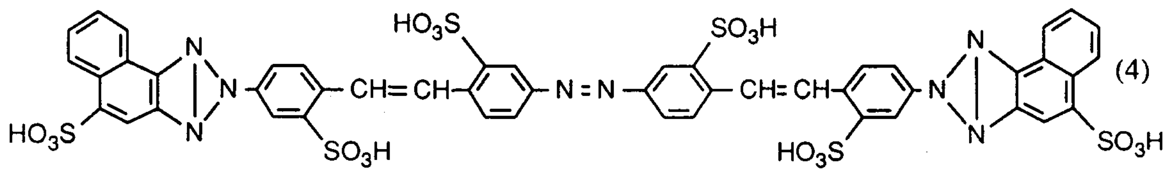

(4)

zusammen mit mindestens einem der blaufärbenden Farbstoffe der Formeln

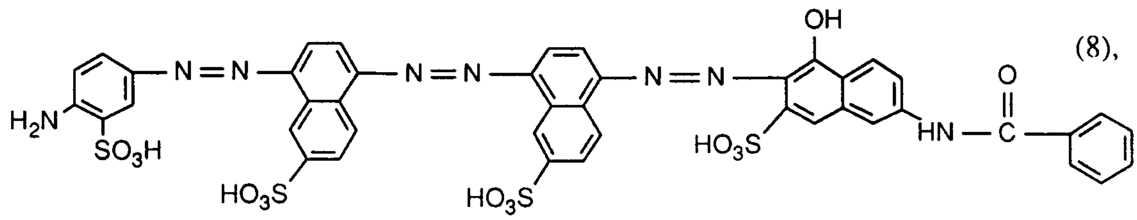

(8),

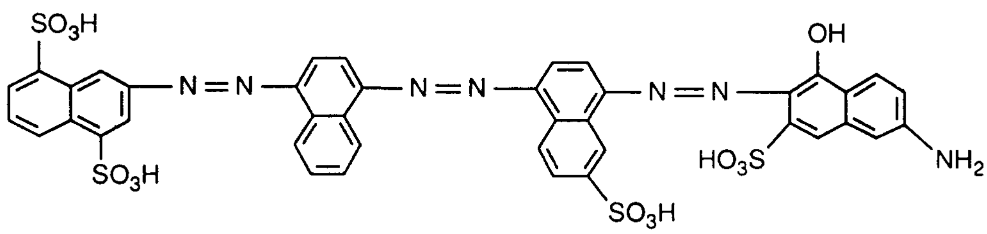

(9),

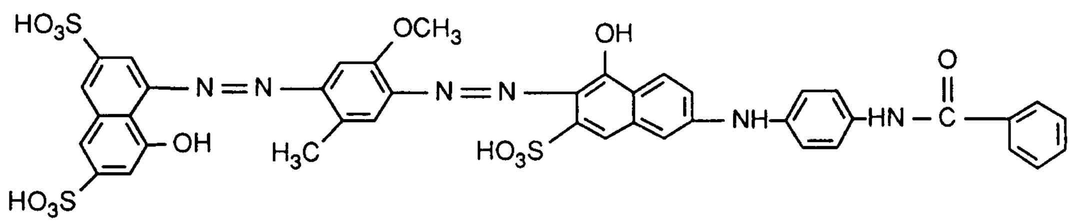

(10),

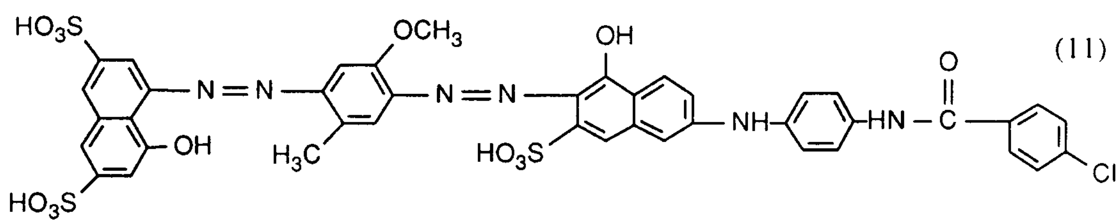

(11)

und

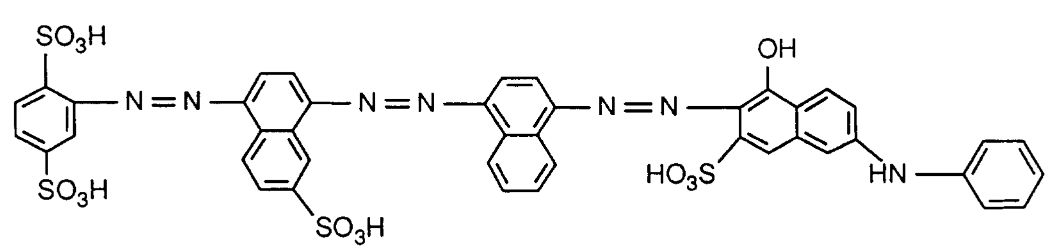

(11a)

und mindestens einem der rotfärbenden Farbstoffe der Formeln

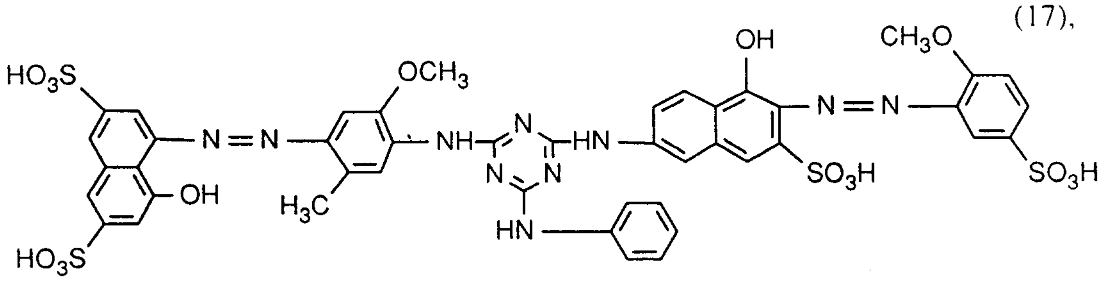

(17),

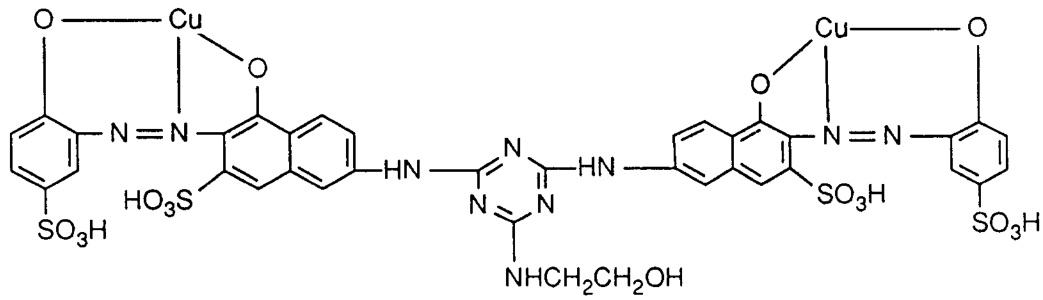

(18),

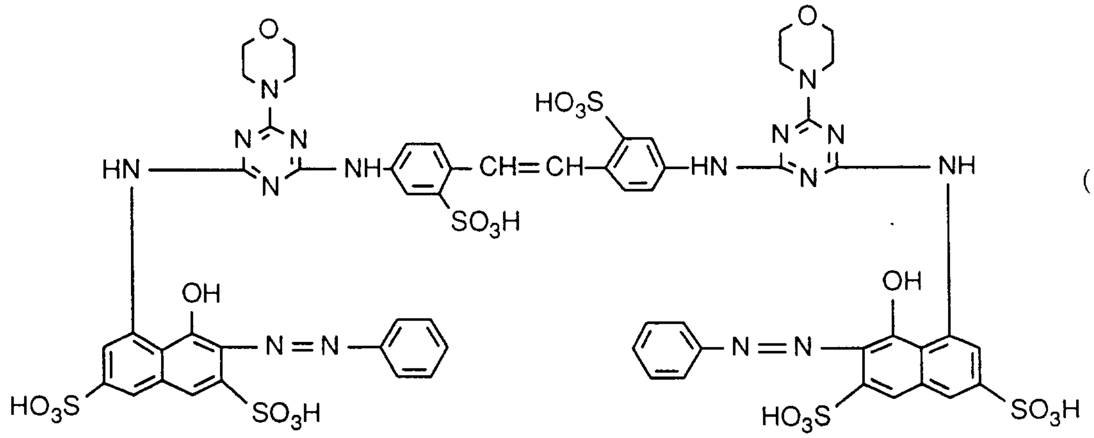

(19),

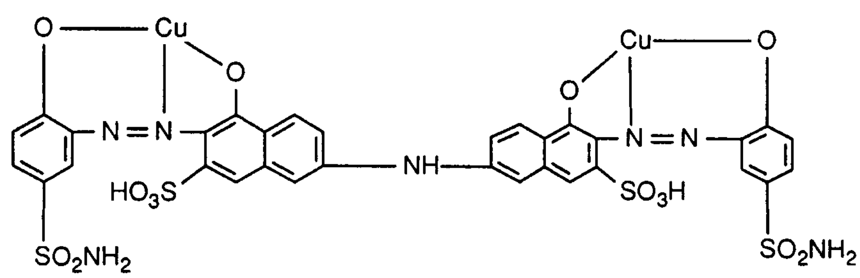

(20)

und

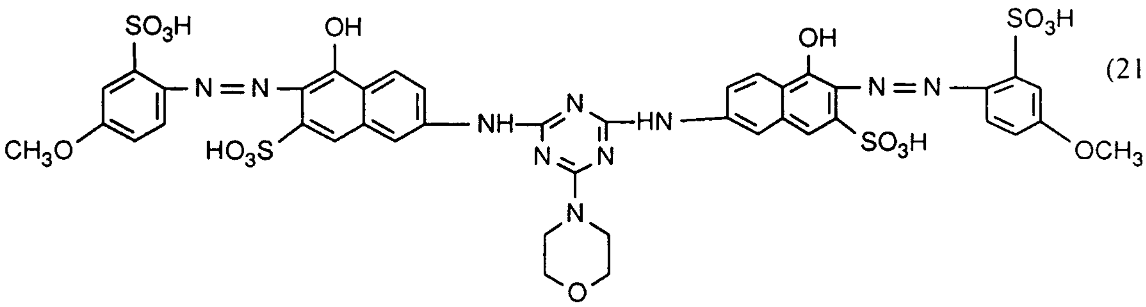

(21),

insbesondere einen gelbfärbenden Farbstoff der Formel (4) zusammen mit einem blaufärbenden Farbstoff der Formel (8) und einem rotfärbenden Farbstoff der Formel (17), verwendet.

**13.** Verfahren gemäss einem der Ansprüche 1 bis 12, dadurch gekennzeichnet, dass man in Gegenwart eines Salzes, insbesondere in Gegenwart eines Alkalihalogenids oder eines Alkalisulfats, färbt, wobei ein Teil der Salzmenge zu Beginn des Färbeprozesses zugegeben wird und ein weiterer Teil kurz vor oder nach Erreichung der Färbetemperatur als ganzes oder portionsweise zugegeben wird.

**14.** Verfahren gemäss Anspruch 13, dadurch gekennzeichnet, dass man eine von der Gesamtmenge der verwendeten Farbstoffe abhängende Gesamtmenge an Salz verwendet.

**15.** Verfahren gemäss einem der Ansprüche 1 bis 14, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Synthesefasern unter den Färbebedingungen für die Synthesefasern färbt.

**16.** Verfahren gemäss Anspruch 15, dadurch gekennzeichnet, dass man Polyester/Baumwoll-Mischgewebe in einem einstufigen, einbadigen Verfahren färbt, wobei man neben einer Farbstoffmischung gemäss einem der Ansprüche 1 bis 12 einen Dispersionsfarbstoff verwendet und aus wässriger Flotte bei Temperaturen im Bereich von 100 bis 150 °C, vorzugsweise 120 bis 130 °C, und einem pH-Wert zwischen 4 und 7,5 färbt.

**17.** Das gemäss einem der Ansprüche 1 bis 16 gefärbte Material, insbesondere das Textilmaterial.

**Claims**

**1.** A process for dyeing or printing hydroxyl group-containing fibre materials, which comprises using at least one yellow or orange dyeing dye of formula

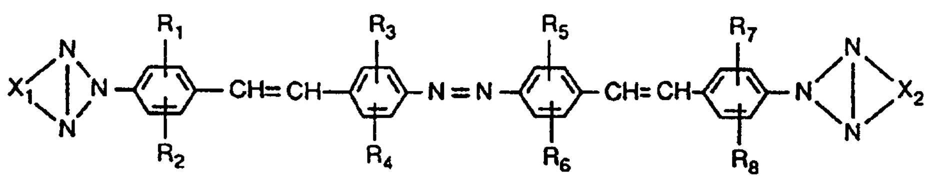

(1),

wherein $X_1$ and $X_2$ are each a radical of the naphthalene series and $R_1$, $R_2$, $R_3$, $R_4$, $R_5$, $R_6$, $R_7$ and $R_8$ are hydrogen, $C_1$-$C_8$alkyl, $C_1$-$C_8$alkoxy, halogen, carboxy, sulfo, ureido or $C_2$-$C_6$alkanoylamino which is unsubstituted or substituted in the alkyl moiety, together with at least one blue dyeing dye and/or at least one red dyeing dye.

**2.** A process for trichromatic dyeing or printing according to claim 1, which comprises using at least one yellow or orange dyeing dye of formula (I) according to claim 1 together with at least one blue dyeing dye and at least one red dyeing dye.

**3.** A process according to either claim 1 or claim 2, wherein $R_1$, $R_2$, $R_3$, $R_4$, $R_5$, $R_6$, $R_7$ and $R_8$ are hydrogen, $C_1$-$C_4$alkyl, $C_1$-$C_4$alkoxy, $C_2$-$C_4$alkanoylamino, halogen or sulfo.

**4.** A process according to any one of claims 1 to 3, wherein $R_1$, $R_2$, $R_3$, $R_4$, $R_5$, $R_6$, $R_7$ and $R_8$ are hydrogen or sulfo.

**5.** A process according to any one of claims 1 to 4, wherein $X_1$ and $X_2$ are a naphthalene radical which is unsubstituted or substituted by $C_1$-$C_4$alkyl, $C_1$-$C_4$alkoxy, halogen, carboxy, sulfo, ureido or $C_2$-$C_4$alkanoylamino, especially sulfo.

**6.** A process according to any one of claims 1 to 5, wherein the dye of formula (I) used is a dye of formula

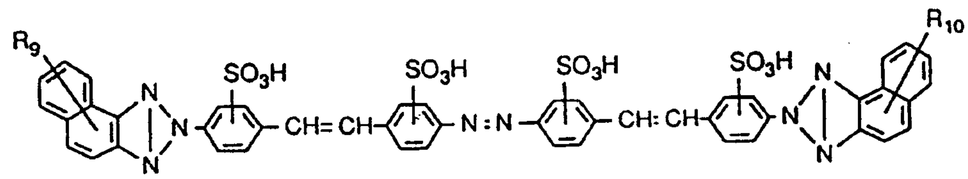

(3)

wherein $R_9$ and $R_{10}$ are hydrogen, $C_1$-$C_4$alkyl, $C_1$-$C_4$alkoxy, $C_2$-$C_4$alkanoylamino, halogen or sulfo, especially hydrogen or sulfo.

**7.** A process according to either claim 1 or claim 2, wherein the dye of formula (I) used is a dye of formula

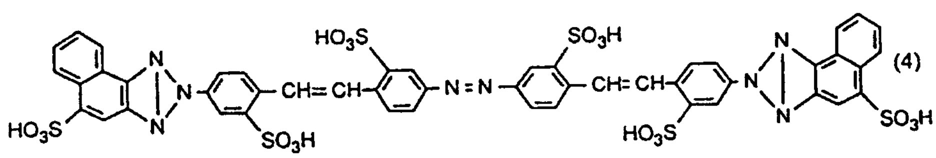

(4)

**8.** A process according to any one of claims 1 to 7, which comprises using as blue dyeing dye at least one dye of formulae (5), (6) and (7)

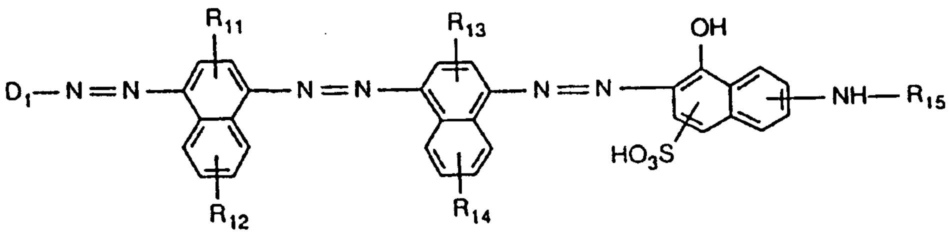

(5),

wherein $D_1$ is unsubstituted or substituted phenyl or naphthyl, $R_{11}$, $R_{12}$, $R_{13}$ and $R_{14}$ are hydrogen, unsubstituted or substituted $C_1$-$C_8$alkyl or $C_1$-$C_8$alkoxy, halogen, carboxy, sulfo, ureido or $C_2$-$C_6$alkanoylamino which is unsubstituted or substituted in the alkyl moiety and $R_{15}$ is hydrogen, unsubstituted or substituted $C_1$-$C_8$alkyl, unsubstituted $C_2$-$C_6$alkanoyl or $C_2$-$C_6$alkanoyl which is substituted in the alkyl moiety, or phenyl or benzoyl which are unsubstituted or substituted in the phenyl ring,

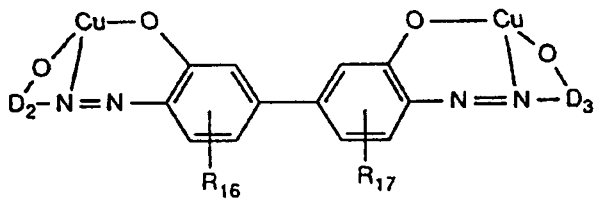

(6).

wherein $D_2$ and $D_3$ are unsubstituted or substituted naphthyl, and $R_{16}$ and $R_{17}$ are hydrogen, unsubstituted or substituted $C_1$-$C_8$alkyl or $C_1$-$C_8$alkoxy, halogen, carboxy, sulfo, ureido or $C_2$-$C_6$alkanoylamino which is unsubstituted or substituted in the alkyl moiety,

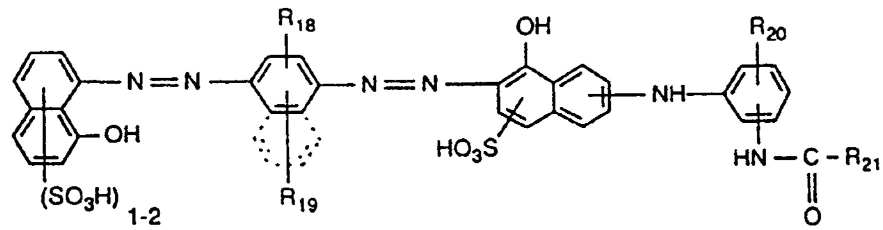

(7),

wherein $R_{18}$, $R_{19}$ and $R_{20}$ are hydrogen, unsubstituted or substituted $C_1$-$C_8$alkyl or $C_1$-$C_8$alkoxy, halogen, carboxy, sulfo, ureido or $C_2$-$C_6$alkanoylamino which is unsubstituted or substituted in the alkyl moiety, and $R_{21}$ is unsubstituted or substituted $C_1$-$C_8$alkyl or phenyl.

**9.** A process according to any one of claims 1 to 8, which comprises using as blue dyeing dye at least one dye of formulae

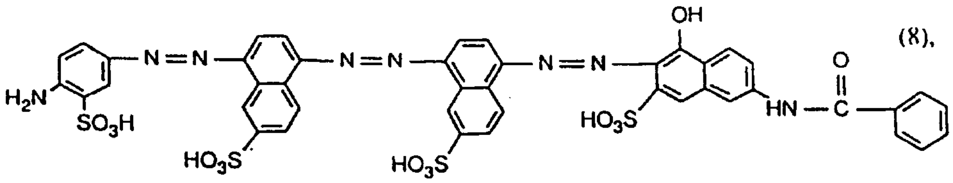

(8),

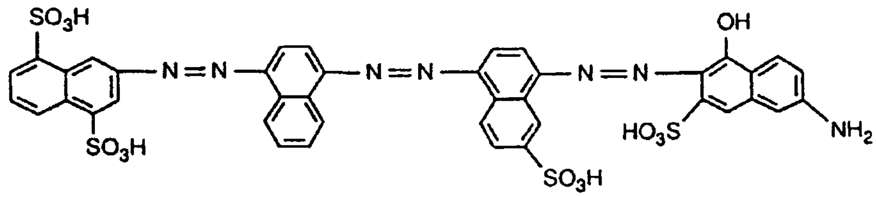

(9).

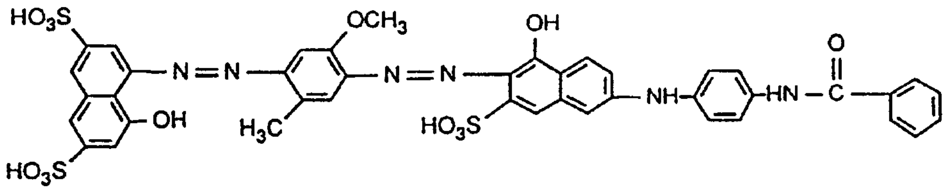

(10),

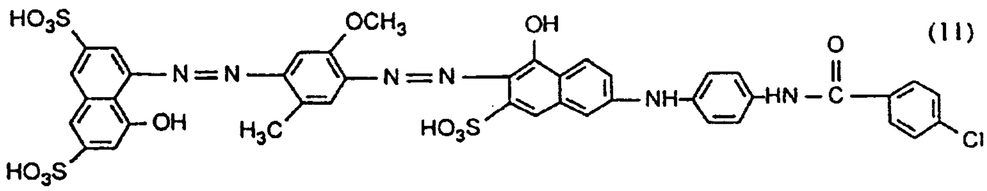

(11)

and

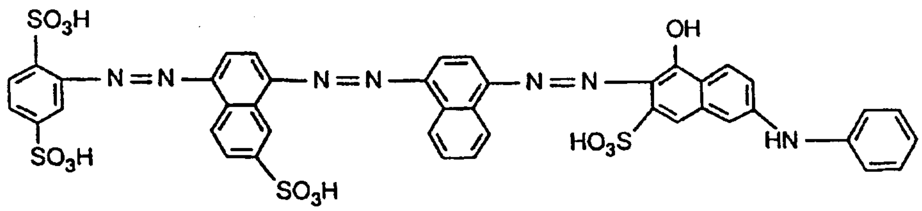

(11a)

**10.** A process according to any one of claims 1 to 9, which comprises using as red dyeing dye at least one dye of formulae (12), (13), (14), (15) and (16)

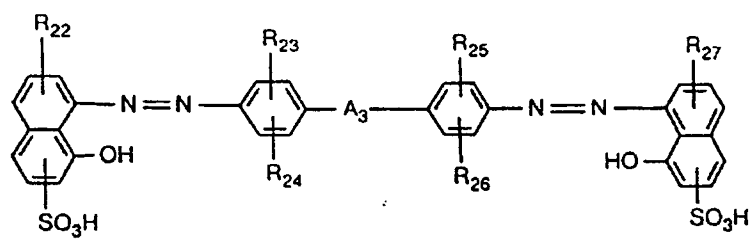

(12),

wherein $R_{22}$, $R_{23}$, $R_{24}$, $R_{25}$, $R_{26}$ and $R_{27}$ are hydrogen, unsubstituted or substituted $C_1$-$C_8$alkyl or $C_1$-$C_8$alkoxy, halogen, carboxy, sulfo, ureido or $C_2$-$C_6$alkanoylamino which is unsubstituted or substituted in the alkyl moiety, and $A_3$ is a radical of formula

-NH-,

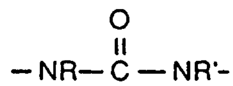

or

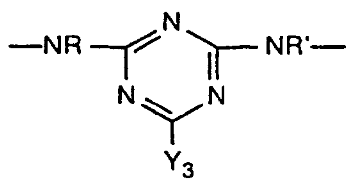

wherein R and R' are hydrogen or unsubstituted or substituted $C_1$-$C_8$alkyl, and $Y_3$ is hydroxy, $C_1$-$C_4$alkoxy, chloro, bromo, $C_1$-$C_4$alkylthio, amino, N-mono- or N,N-di-$C_1$-$C_4$alkylamino which is unsubstituted or substituted in the alkyl moiety by hydroxy, sulfo, carboxy or $C_1$-$C_4$alkoxy, or are cyclohexylamino, phenylamino or N-$C_1$-$C_4$alkyl-N-phenylamino which are unsubstituted or substituted in the phenyl moiety by $C_1$-$C_4$alkyl, $C_1$-$C_4$alkoxy, carboxy, sulfo and/or halogen, or are morpholino or 3-carboxy- or 3-carbamoylpyridin-1-yl,

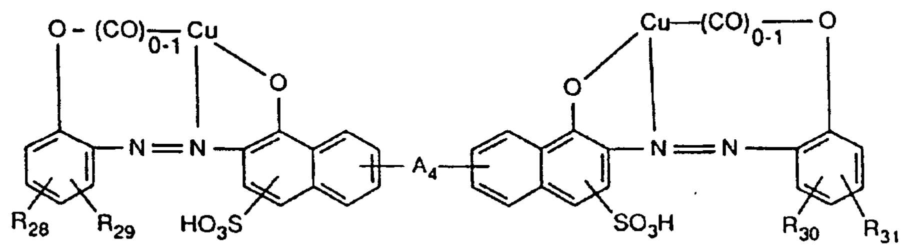
(13),

wherein $R_{28}$, $R_{29}$, $R_{30}$ and $R_{31}$ are hydrogen, unsubstituted or substituted $C_1$-$C_8$alkyl or $C_1$-$C_8$alkoxy, halogen, carboxy, sulfo, ureido, sulfamoyl or $C_2$-$C_6$alkanoylamino which is unsubstituted or substituted in the alkyl moiety, and $A_4$ is as defined for $A_3$ under formula (12),

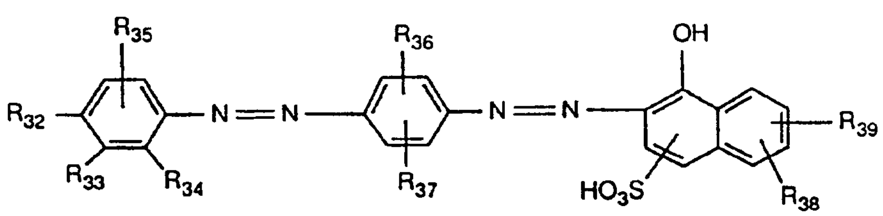
(14),

wherein $R_{32}$, $R_{33}$, $R_{34}$, $R_{35}$, $R_{36}$, $R_{37}$ and $R_{38}$ are hydrogen, unsubstituted or substituted $C_1$-$C_8$alkyl or $C_1$-$C_8$alkoxy, halogen, carboxy, sulfo, ureido or $C_2$-$C_6$alkanoylamino which is unsubstituted or substituted in the alkyl moiety, and $R_{39}$ is benzoylamino or benzoylamino which is substituted in the phenyl ring, or a radical of formula

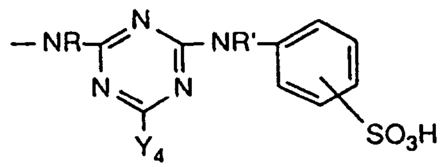

which may be further substituted in the phenyl ring, wherein R and R' are hydrogen or unsubstituted or substituted $C_1$-$C_8$alkyl and $Y_4$ is as defined for $Y_3$ under formula (12),

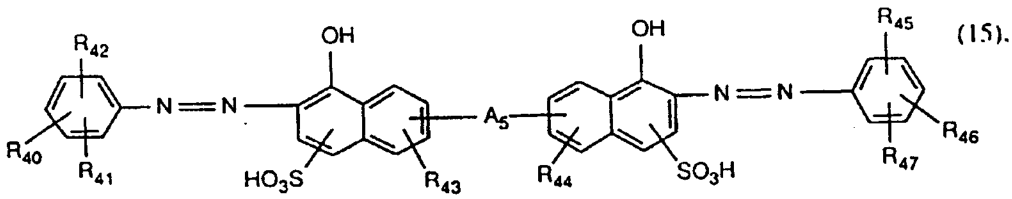

(15).

wherein $R_{40}$, $R_{41}$, $R_{42}$, $R_{43}$, $R_{44}$, $R_{45}$, $R_{46}$ and $R_{47}$ are hydrogen, unsubstituted or substituted $C_1$-$C_8$alkyl or $C_1$-$C_8$alkoxy, halogen, carboxy, sulfo, ureido or $C_2$-$C_6$alkanoylamino which is unsubstituted or substituted in the alkyl moiety, and $R_{40}$ and $R_{46}$ may additionally be phenylazo or phenylazo which is substituted in the phenyl ring, and $A_5$ is as defined for $A_3$ under formula (12), or is a radical of formula

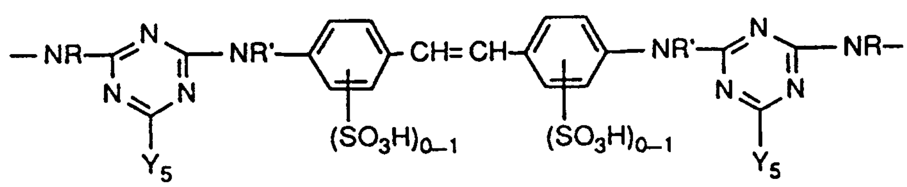

wherein R and R' are hydrogen or unsubstituted or substituted $C_1$-$C_8$alkyl and $Y_5$ is as defined for $Y_3$ under formula (12),

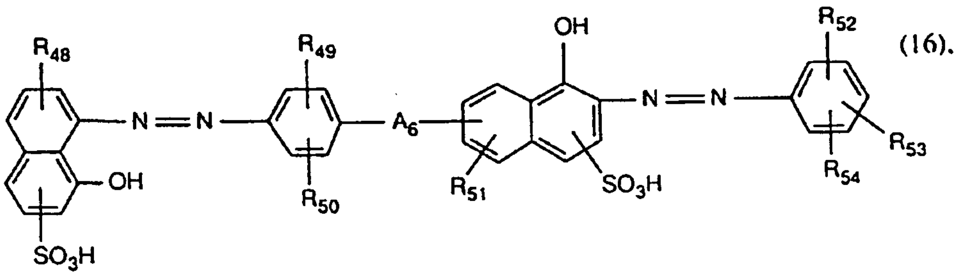

(16).

wherein $R_{48}$, $R_{49}$, $R_{50}$, $R_{51}$, $R_{52}$, $R_{53}$ and $R_{54}$ are hydrogen, unsubstituted or substituted $C_1$-$C_8$alkyl or $C_1$-$C_8$alkoxy, halogen, carboxy, sulfo, ureido or $C_2$-$C_6$alkanoylamino which is unsubstituted or substituted in the alkyl moiety, and $A_5$ is as defined for $A_3$ under formula (12).

**11.** A process according to any one of claims 1 to 10, which comprises using as red dyeing dye at least one dye of formulae

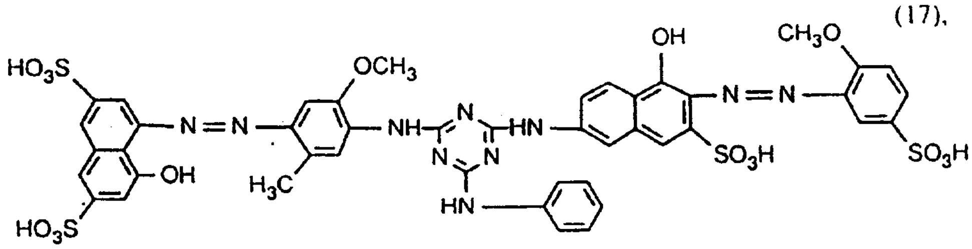

(17),

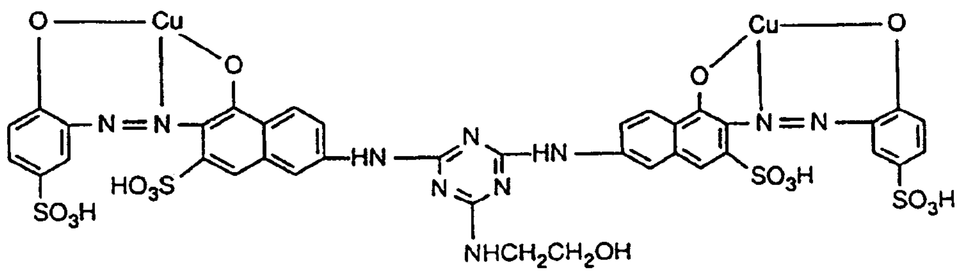

(18),

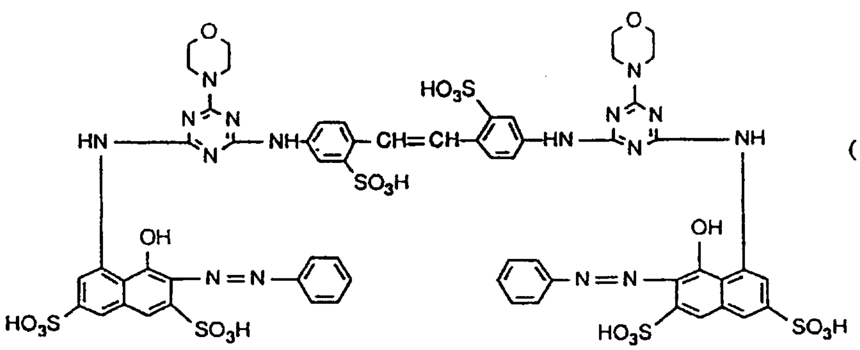

(19),

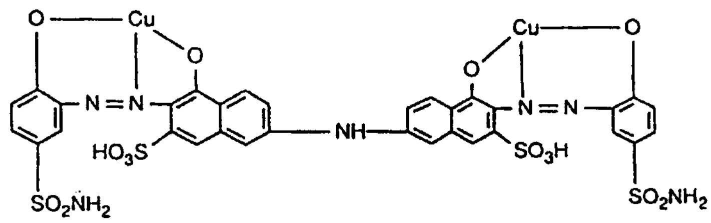

(20)

and

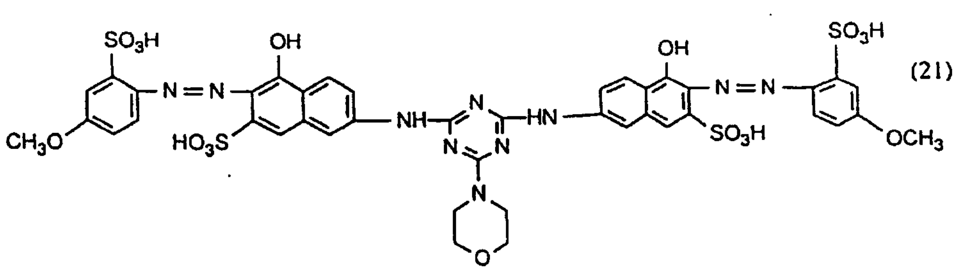

(21)

**12.** A process according to claim 2, which comprises using one yellow dyeing dye of formula

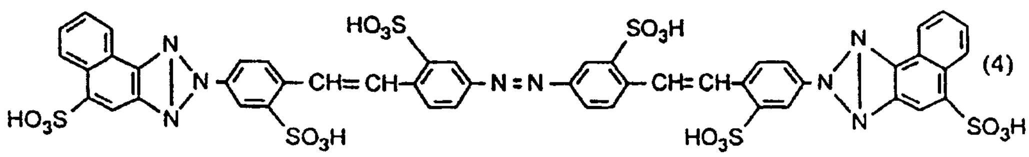

(4)

together with at least one of the blue dyeing dyes of formulae

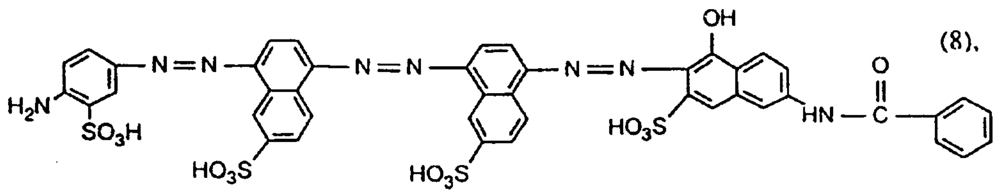

(8),

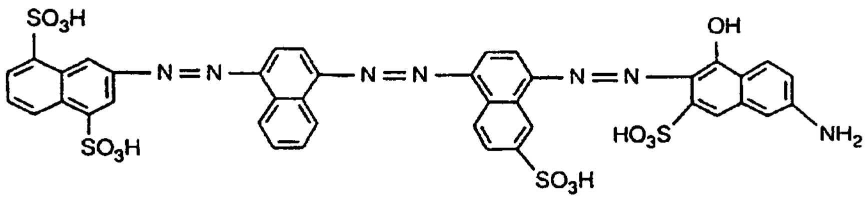

(9),

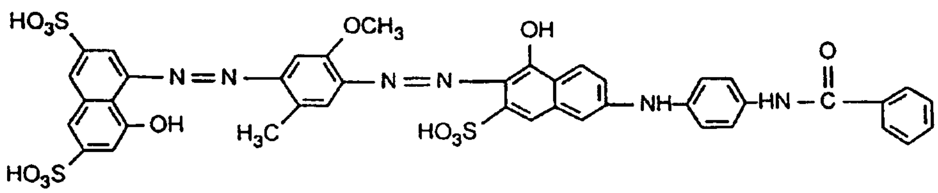

(10),

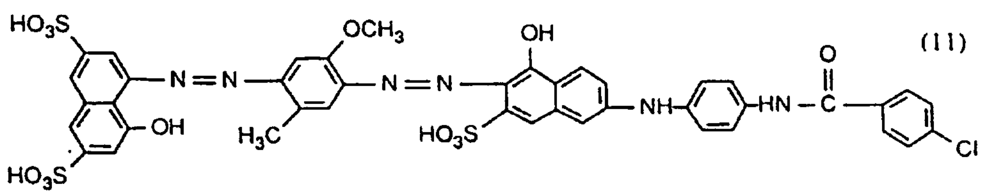

(11)

and

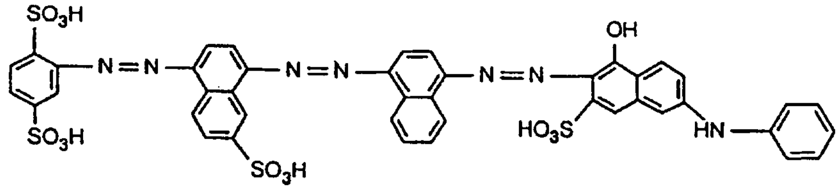

(11a)

and at least one of the red dyeing dyes of formulae

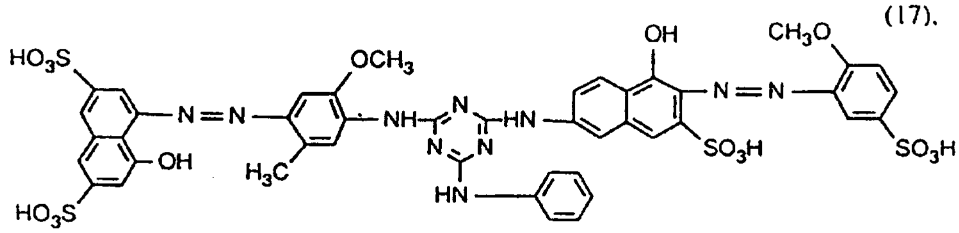

(17).

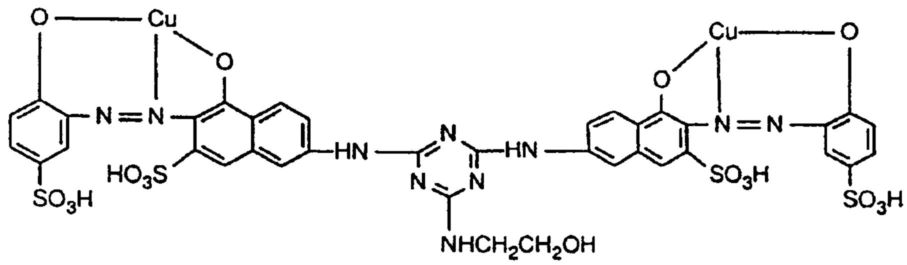

(18).

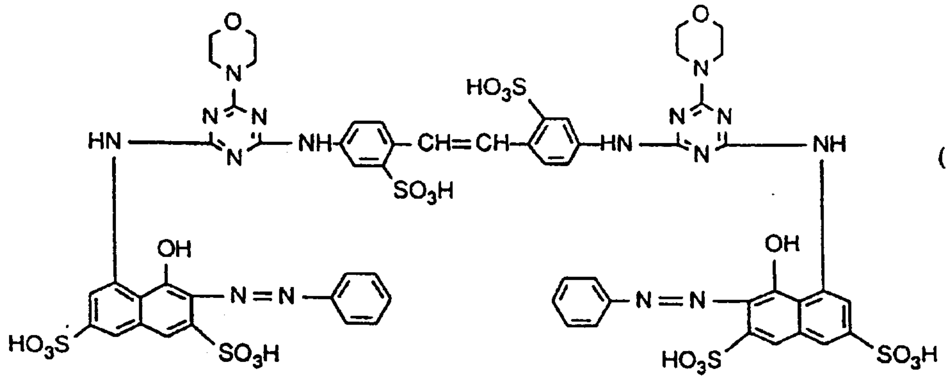

(19).

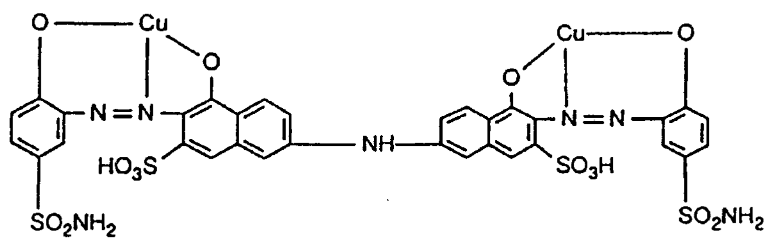

(20)

and

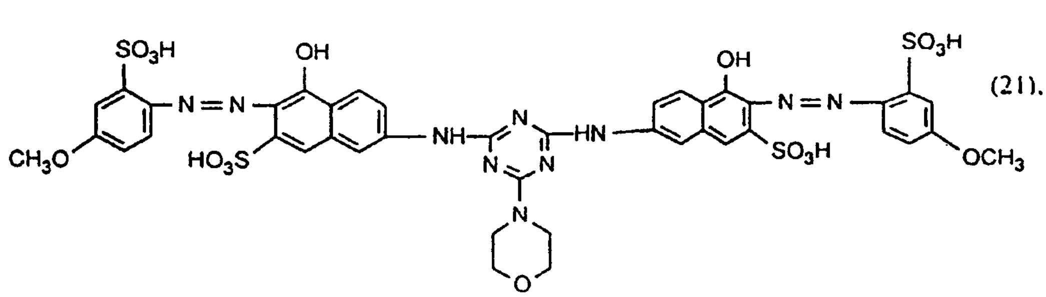

(21).

especially a yellow dyeing dye of formula (4) together with a blue dyeing dye of formula (8) and a red

dyeing dye of formula (17).

**13.** A process according to any one of claims 1 to 12, wherein dyeing is carried out in the presence of a salt, especially in the presence of an alkali metal halide or alkali metal sulfate, a portion of the amount of salt being added at the start of the dyeing process and a further portion being added all at once or in portions shortly before or after the dyeing temperature has been reached.

**14.** A process according to claim 13, wherein the total amount of salt used depends on the total amount of dye used.

**15.** A process according to any one of claims 1 to 14, which comprises dyeing blends of synthetic fibres and cellulosic fibre materials, especially polyester/cotton blends, in the presence of a disperse dye for the synthetic fibres under the dyeing conditions for the synthetic fibres.

**16.** A process according to claim 15, which comprises dyeing polyester/cotton blends in a one-step, single-bath process, using in addition to a dye mixture according to any one of claims 1 to 12 a disperse dye and dyeing from an aqueous liquor at temperatures in the range from 100 to 150 °C, preferably from 120 to 130 °C, and at a pH of between 4 and 7.5.

**17.** The material, especially textile material, dyed according to any one of claims 1 to 16.

**Revendications**

**1.** Procédé de teinture ou d'impression de matériaux fibreux contenant des groupes hydroxyle, caractérisé en ce qu'on utilise au moins un colorant qui teint en jaune ou en orange, de formule :

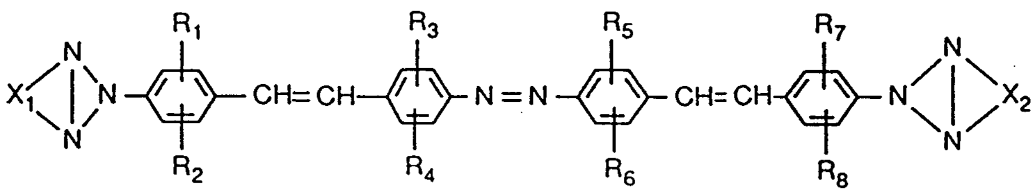

(1),

dans laquelle $X_1$ et $X_2$ représentent toujours un reste de la série naphtalénique, et $R_1$, $R_2$, $R_3$, $R_4$, $R_5$, $R_6$, $R_7$ et $R_8$ représentent un atome d'hydrogène, un groupe alkyle en $C_1$-$C_8$, alcoxy en $C_1$-$C_8$, halogène, carboxy, sulfo, uréido ou un groupe (alcanoyl en $C_2$-$C_6$)amino éventuellement substitué dans la partie alkyle, ensemble avec au moins un colorant qui teint en bleu et/ou au moins un colorant qui teint en rouge.

**2.** Procédé de teinture ou d'impression en trichromie, selon la revendication 1, caractérisé en ce qu'on utilise au moins un colorant de formule (1) qui teint en jaune ou en orange, selon la revendication 1, ensemble avec au moins un colorant qui teint en bleu et au moins un colorant qui teint en rouge.

**3.** Procédé selon la revendication 1 ou 2, caractérisé en ce que $R_1$, $R_2$, $R_3$, $R_4$, $R_5$, $R_6$, $R_7$ et $R_8$ représentent un atome d'hydrogène, un groupe alkyle en $C_1$-$C_4$, alcoxy en $C_1$-$C_4$, (alcanoyl en $C_2$-$C_4$)-amino, halogène ou sulfo.

**4.** Procédé selon l'une des revendications 1 à 3, caractérisé en ce que $R_1$, $R_2$, $R_3$, $R_4$, $R_5$, $R_6$, $R_7$ et $R_8$ représentent un atome d'hydrogène ou un groupe sulfo.

**5.** Procédé selon l'une des revendications 1 à 4, caractérisé en ce que $X_1$ et $X_2$ représentent un reste naphtalénique non substitué ou bien substitué par alkyle en $C_1$-$C_4$, alcoxy en $C_1$-$C_4$, halogène, carboxy, sulfo, uréido ou (alcanoyl en $C_2$-$C_4$)amino et en particulier substitué par sulfo.

**6.** Procédé selon l'une des revendications 1 à 5, caractérisé en ce qu'on utilise comme colorant de formule (1) un colorant de formule :

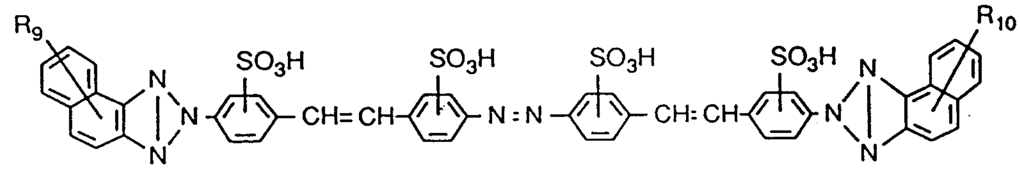

(3)

dans laquelle $R_9$ et $R_{10}$ représentent hydrogène, alkyle en $C_1$-$C_4$, alcoxy en $C_1$-$C_4$, (alcanoyl en $C_2$-$C_4$ )amino, halogène ou sulfo et en particulier représentent hydrogène ou sulfo.

**7.** Procédé selon la revendication 1 ou 2, caractérisé en ce qu'on utilise comme formule (1) un colorant de formule :

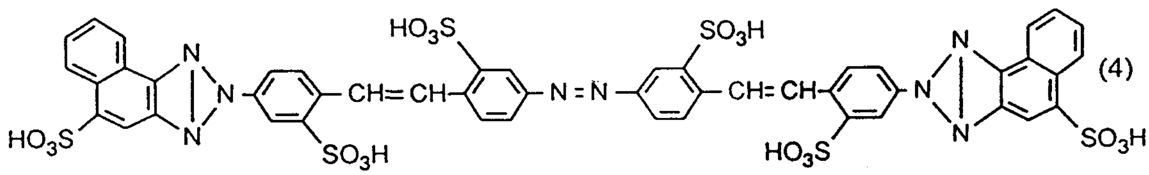

(4)

**8.** Procédé selon l'une des revendications 1 à 7, caractérisé en ce qu'on utilise comme colorant qui teint en bleu au moins un colorant des formules (5), (6) et (7) ci-après :

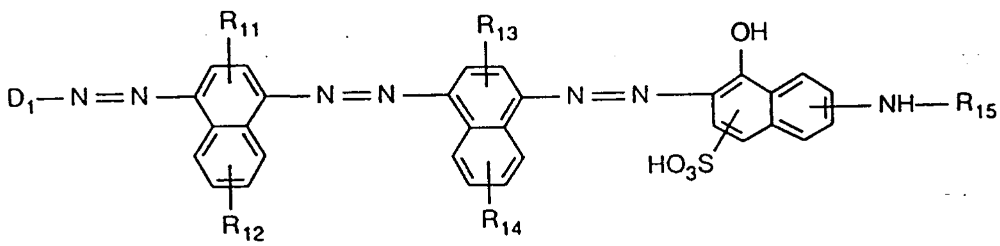

(5),

dans laquelle $D_1$ représente un groupe phényle ou naphtyle éventuellement substitué, $R_{11}$, $R_{12}$, $R_{13}$ et $R_{14}$ représentent un atome d'hydrogène, un groupe alkyle en $C_1$-$C_8$ éventuellement substitué ou un groupe alcoxy en $C_1$-$C_8$ éventuellement substitué, un atome d'halogène, un groupe carboxy, sulfo, uréido ou bien un groupe (alcanoyl en $C_2$-$C_6$)amino éventuelement substitué dans la partie alkyle, et $R_{15}$ représente un atome d'hydrogène, un groupe alkyle en $C_1$-$C_8$ éventuellement substitué, un groupe alcanoyle en $C_2$-$C_6$ éventuellement substitué dans la partie alkyle ou bien un groupe phényle ou benzoyle éventuellement substitué dans le noyau phényle,

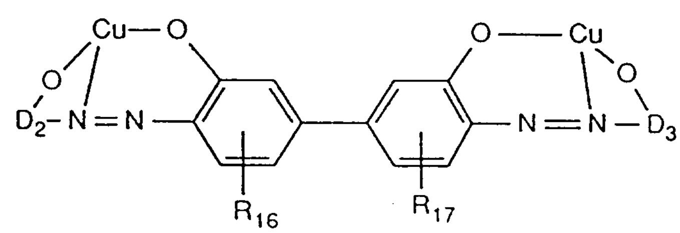

(6),

dans laquelle $D_2$ et $D_3$ représentent un groupe naphtyle éventuellement substitué et $R_{16}$ et $R_{17}$ représentent un atome d'hydrogène ou d'halogène, ou un groupe alkyle en $C_1$-$C_8$ éventuellement substitué ou un groupe alcoxy en $C_1$-$C_8$ éventuellement substitué, un groupe carboxy, sulfo, uréido ou un groupe (alcanoyl en $C_2$-$C_6$)amino éventuellement substitué dans la partie alkyle,

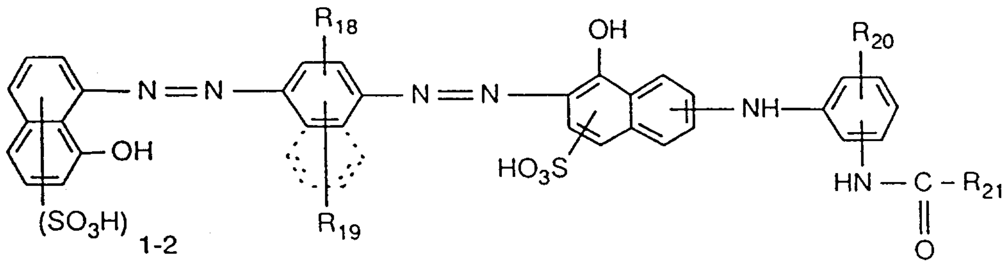

(7),

dans laquelle $R_{18}$, $R_{19}$ et $R_{20}$ représentent un atome d'hydrogène, un atome d'halogène ou un groupe alkyle en $C_1$-$C_8$ éventuellement substitué ou un groupe alcoxy en $C_1$-$C_8$ éventuellement substitué, un groupe carboxy, sulfo, uréido ou un groupe (alcanoyl en $C_2$-$C_6$)amino éventuellement substitué dans la partie alkyle et $R_{21}$ représente un groupe alkyle en $C_1$-$C_8$ éventuellement substitué ou un groupe phényle éventuellement substitué.

**9.** Procédé selon l'une des revendications 1 à 8, caractérisé en ce qu'on utilise comme colorant qui teint en bleu au moins un colorant des formules ci-après :

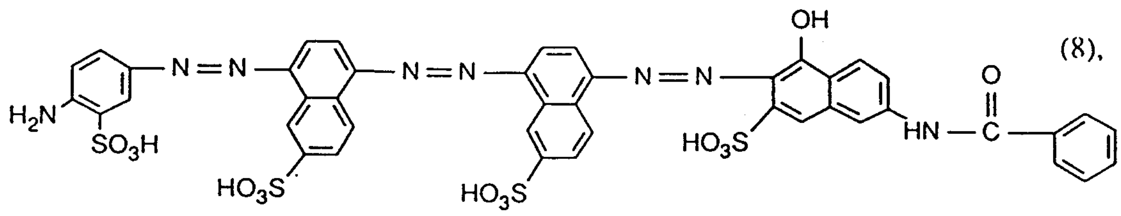

(8),

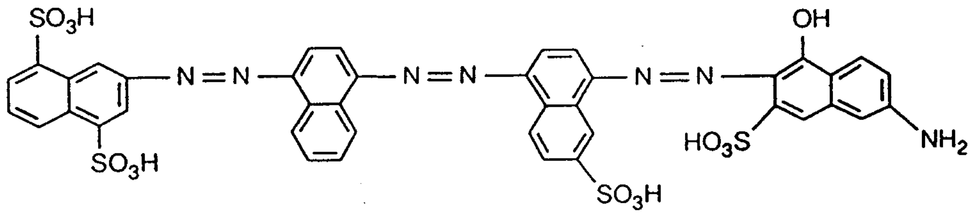

(9),

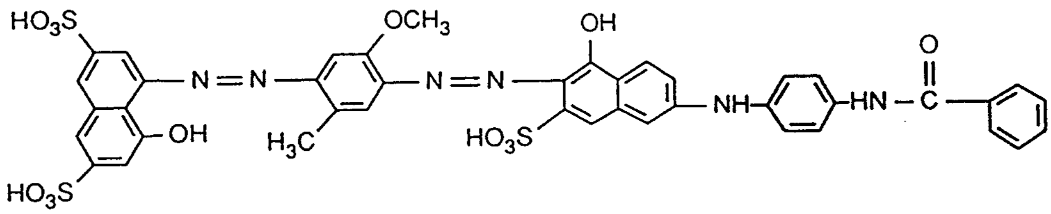

(10),

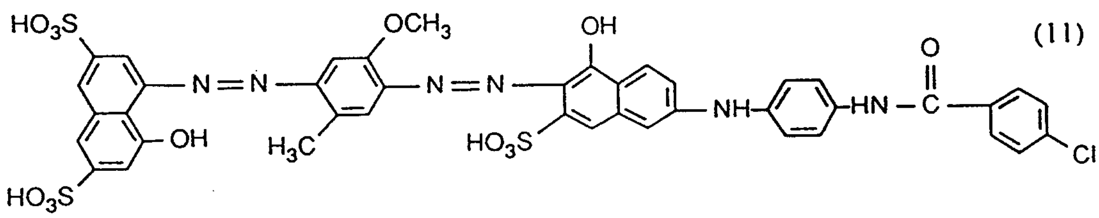

(11)

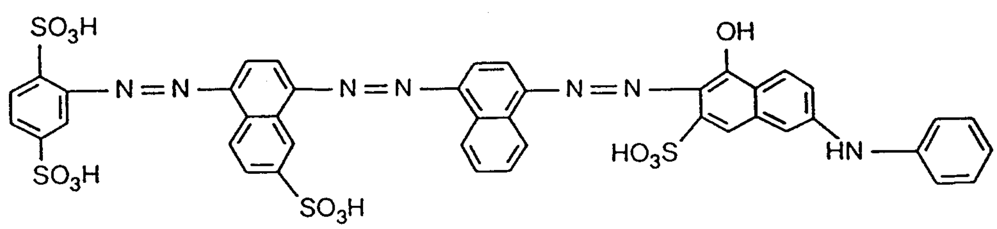

(11a)

**10.** Procédé selon l'une des revendications 1 à 9, caractérisé en ce qu'on utilise comme colorant qui teint en rouge au moins un colorant des formules (12), (13), (14), (15) et (16) ci-après :

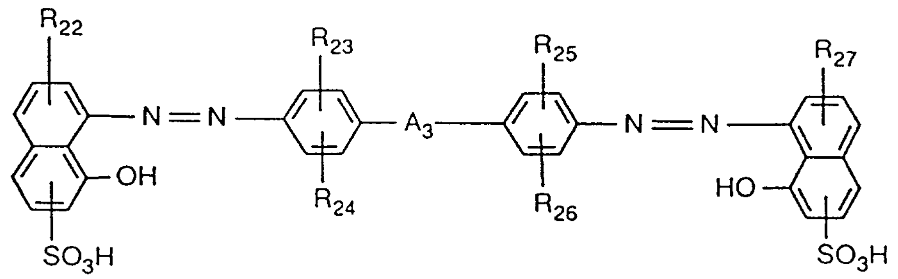

(12),

dans laquelle $R_{22}$, $R_{23}$, $R_{24}$, $R_{25}$, $R_{26}$ et $R_{27}$ représentent un atome d'hydrogène, un groupe alkyle en $C_1$-$C_8$ éventuellement substitué ou un groupe alcoxy en $C_1$-$C_8$ éventuellement substitué, un atome d'halogène, un groupe carboxy, sulfo, uréido ou un groupe (alcanoyl en $C_2$-$C_6$)amino éventuellement substitué dans sa partie alkyle, et $A_3$ représente un reste de formule -NH-,

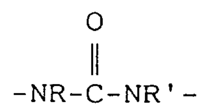

ou

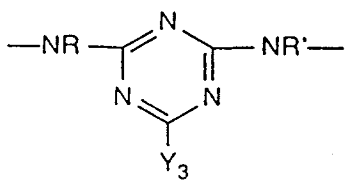

où R et R' représentent un atome d'hydrogène ou un groupe alkyle en $C_1$-$C_8$ éventuellement substitué, et $Y_3$ représente un groupe hydroxy, alcoxy en $C_1$-$C_4$, un atome de chlore ou de brome, un groupe (alkyl en $C_1$-$C_4$)thio, un groupe amino, un groupe N-(alkyl en $C_1$-$C_4$)amino ou N,N-di(alkyl en $C_1$-$C_4$)-amino non substitué ou substitué dans sa partie alkyle par hydroxy, sulfo, carboxy ou alcoxy en $C_1$-$C_4$, un groupe cyclohexylamino, un groupe phénylamino ou bien un groupe N-(alkyl en $C_1$-$C_4$)-N-phénylamino, non substitués ou bien substitués dans la partie phényle par alkyle en $C_1$-$C_4$, alcoxy en $C_1$-$C_4$, carboxy, sulfo et/ou halogène, un groupe morpholino ou un groupe 3-carboxy- ou 3-carbamoyl-pyridine-1-yle,

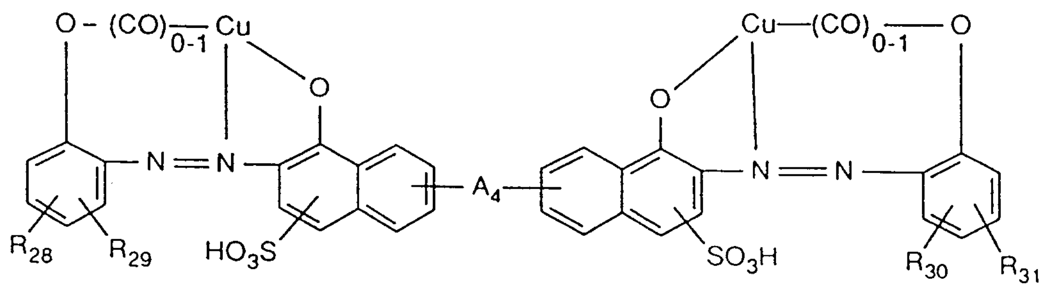

(13),

dans laquelle $R_{28}$, $R_{29}$, $R_{30}$ et $R_{31}$ représentent un atome d'hydrogène, un groupe alkyle en $C_1$-$C_8$ éventuellement substitué ou un groupe alcoxy en $C_1$-$C_8$ éventuellement substitué, un atome d'halogène, un groupe carboxy, sulfo, uréido, sulfamoyle ou un groupe alcanoylamino en $C_2$-$C_6$ éventuellement substitué dans la partie alkyle, et $A_4$ a la signification indiquée ci-dessus pour la $A_3$ dans la formule (12),

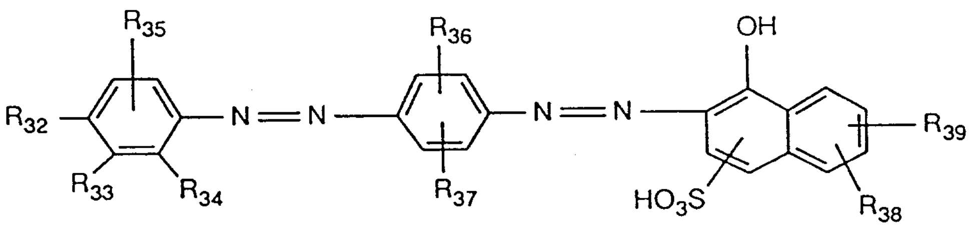

(14),

dans laquelle $R_{32}$, $R_{33}$, $R_{34}$, $R_{35}$, $R_{36}$, $R_{37}$ et $R_{38}$ représentent un atome d'hydrogène, un groupe alkyle en $C_1$-$C_8$ éventuellement substitué ou un groupe alcoxy en $C_1$-$C_8$ éventuellement substitué, un atome d'halogène, un groupe carboxy, sulfo, uréido ou un groupe alcanoylamino en $C_2$-$C_6$ éventuellement substitué dans sa partie alkyle, et $R_{39}$ représente un groupe benzoylamino éventuellement substitué dans le noyau phényle ou bien un reste de formule :

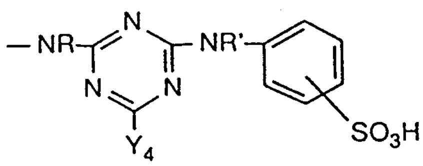

éventuellement substitué dans sa partie phényle, R et R' représentent un atome d'hydrogène ou un groupe alkyle en $C_1$-$C_8$ éventuellement substitué, et $Y_4$ a les significations indiquées ci-dessus pour $Y_3$ dans la formule (12),

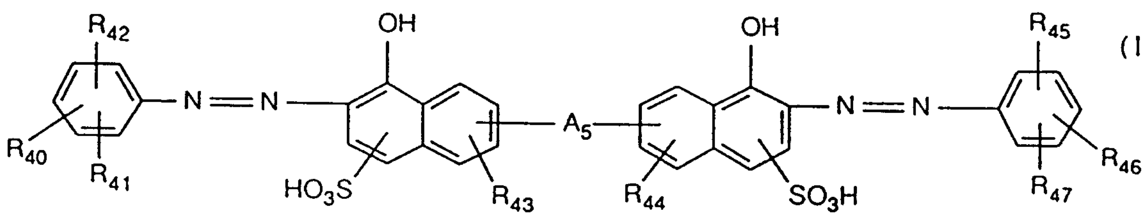

(15),

dans laquelle $R_{40}$, $R_{41}$, $R_{42}$, $R_{43}$, $R_{44}$, $R_{45}$, $R_{46}$ et $R_{47}$ représentent un atome d'hydrogène, un groupe alkyle en $C_1$-$C_8$ éventuellement substitué ou un groupe alcoxy en $C_1$-$C_8$ éventuellement substitué, un atome d'halogène, un groupe carboxy, sulfo, uréido ou bien un groupe (alcanoyl en $C_2$-$C_6$)amino éventuellement substitué dans sa partie alkyle, $R_{40}$ et $R_{46}$ pouvant représenter en outre un groupe phénylazo éventuellement substitué dans son noyau phényle, et $A_5$ a la signification indiquée ci-dessus pour $A_3$ dans la formule (12), ou bien $A_5$ représente un reste de formule :

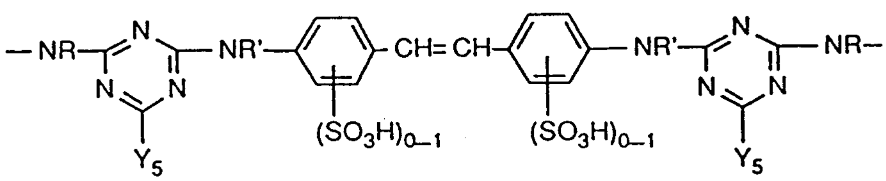

dans laquelle R et R' représentent un atome d'hydrogène ou bien un groupe alkyle en $C_1$-$C_8$ éventuellement substitué et $Y_5$ a la signification indiquée ci-dessus pour $Y_3$ dans la formule (12),

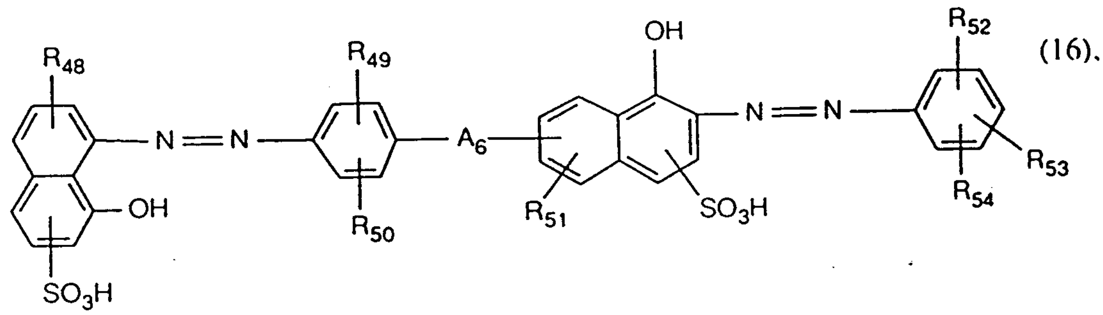

(16).

dans laquelle $R_{48}$, $R_{49}$, $R_{50}$, $R_{51}$, $R_{52}$, $R_{53}$ et $R_{54}$ représentent un atome d'hydrogène un groupe alkyle en $C_1$-$C_8$ éventuellement substitué ou un groupe alcoxy en $C_1$-$C_8$ éventuellement substitué, un atome d'halogène, un groupe carboxy, sulfo, uréido ou un groupe (alcanoyl en $C_2$-$C_6$)amino éventuellement substitué dans sa partie alkyle et $A_6$ a la signification indiquée ci-dessus pour $A_3$ dans la formule (12).

**11.** Procédé selon l'une des revendications 1 à 10, caractérisé en ce qu'on utilise comme colorant qui teint en rouge au moins un colorant de formules :

(17),

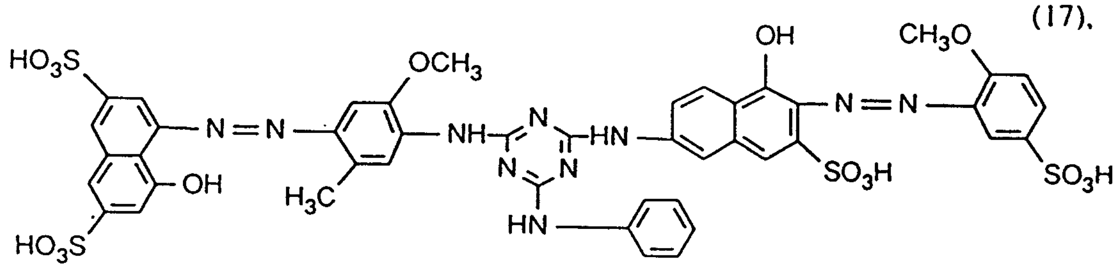

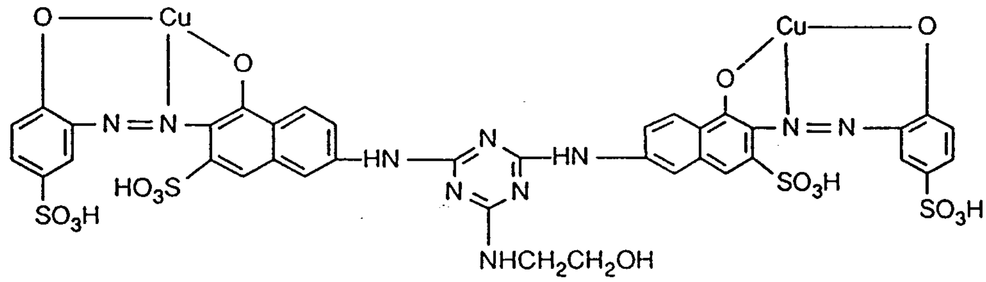

(18),

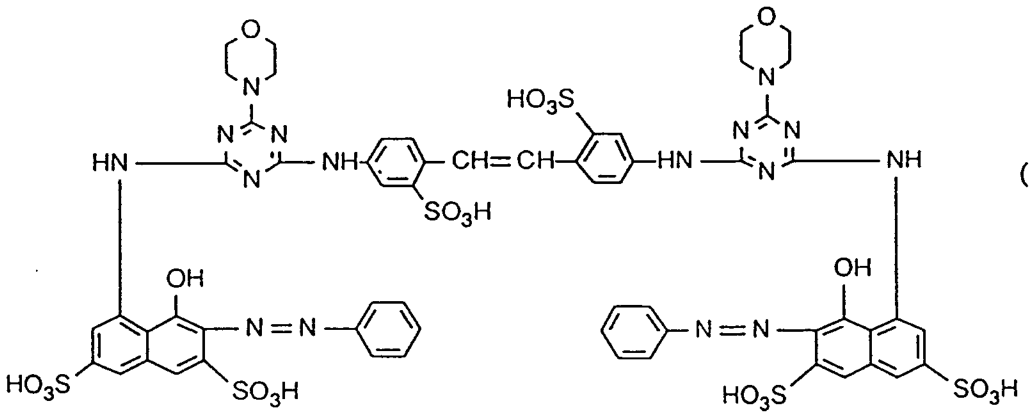

(19),

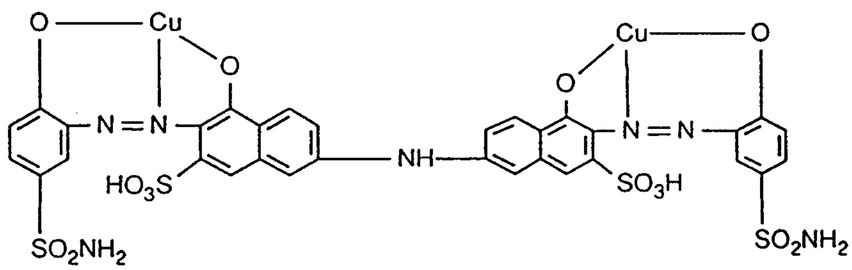

(20)

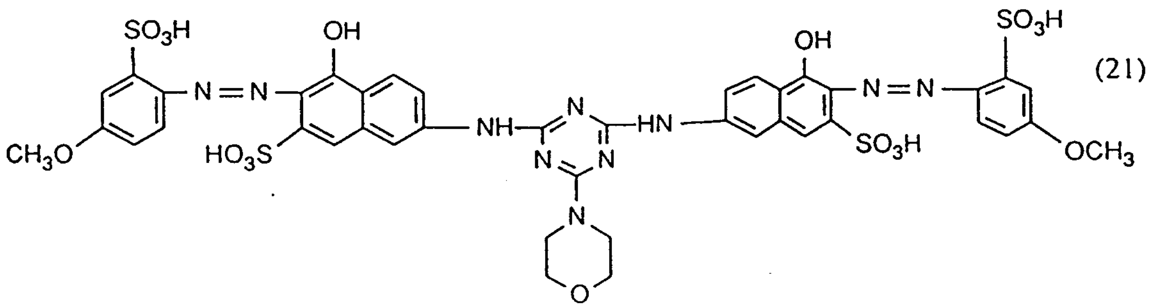

(21)

**12.** Procédé selon la revendication 2, caractérisé en ce qu'on utilise comme colorant qui teint en rouge un colorant de formule :

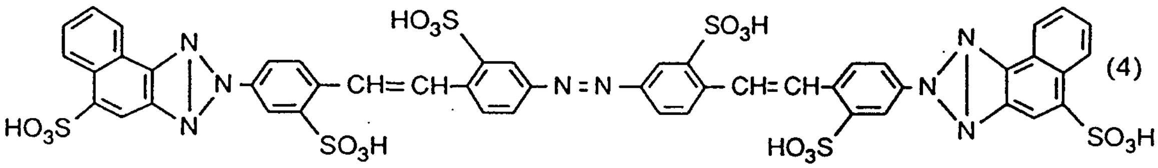

(4)

ensemble avec au moins un colorant qui teint en bleu de formule :

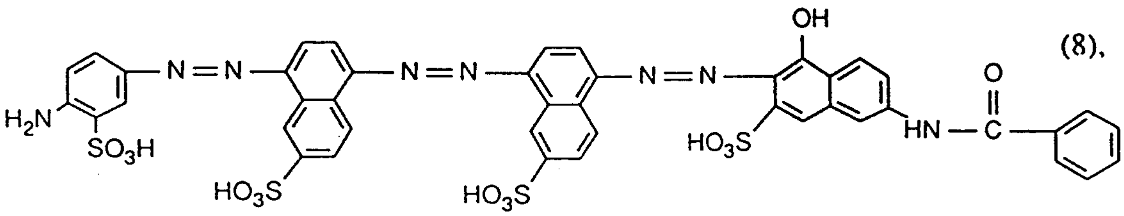

(8),

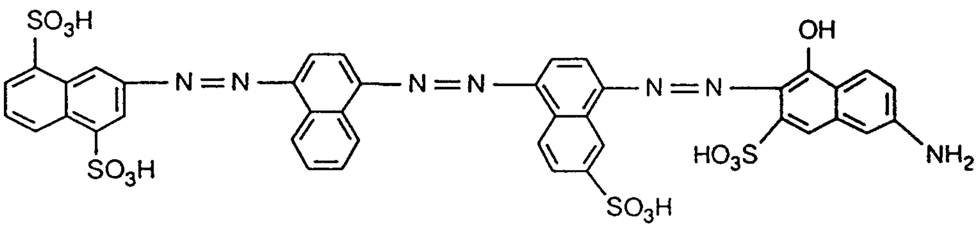

(9),

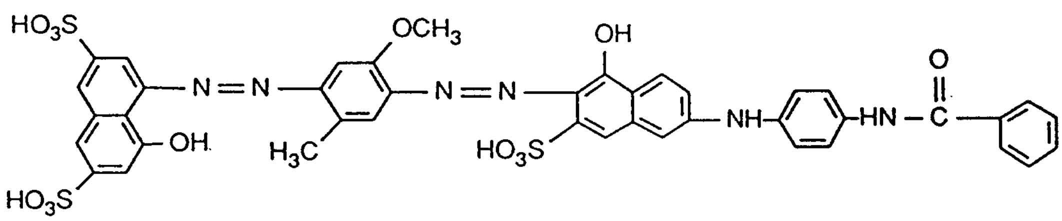

(10),

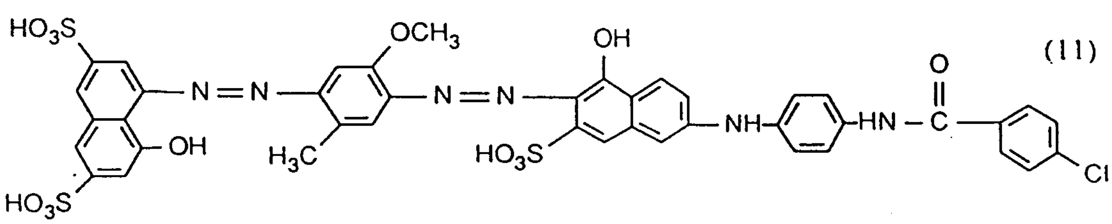

(11)

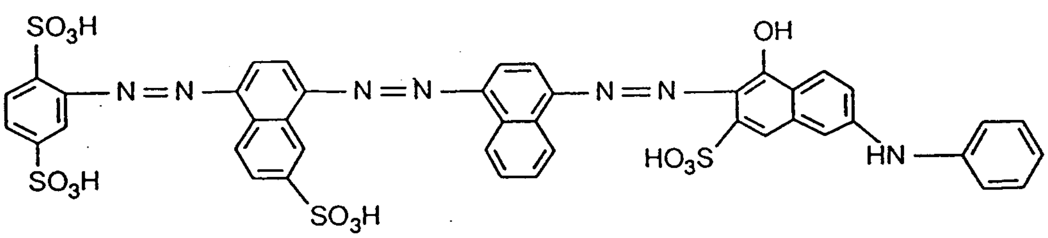

(11a)

et au moins un colorant qui teint en rouge de formule :

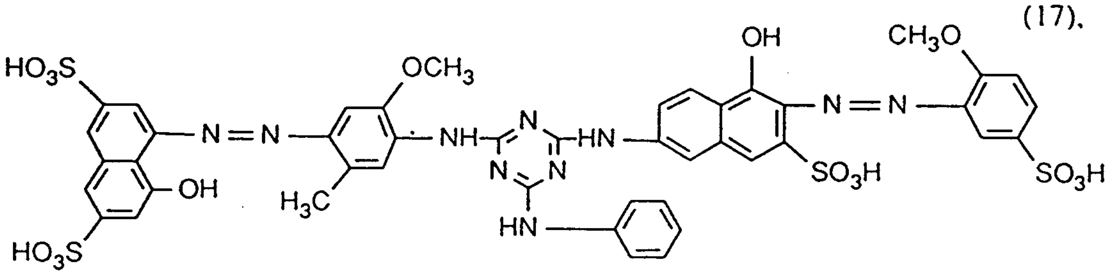

(17),

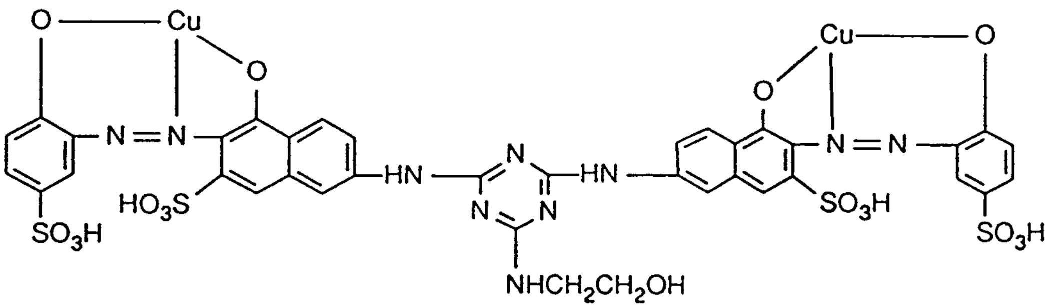

(18),

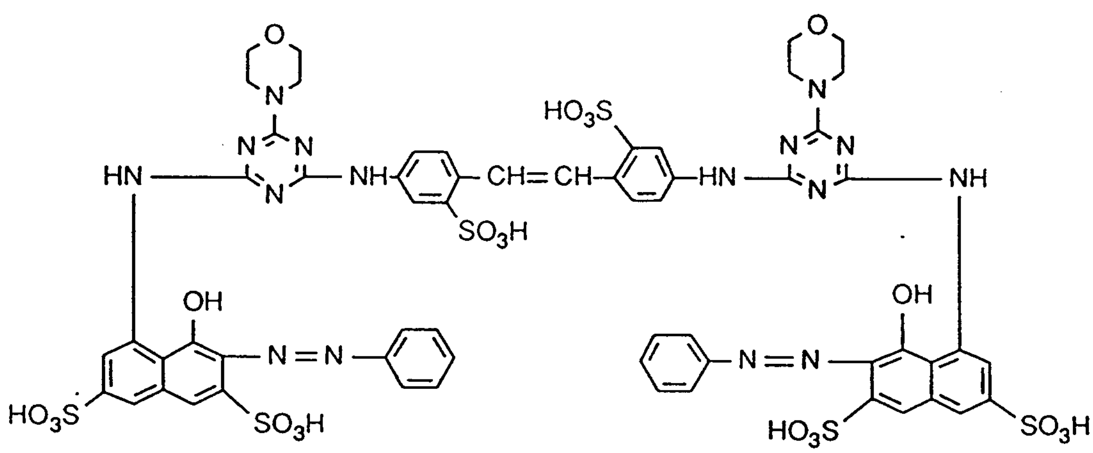

(19),

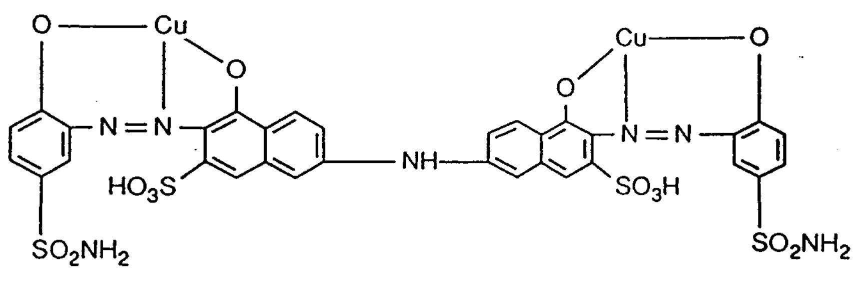

(20)

et

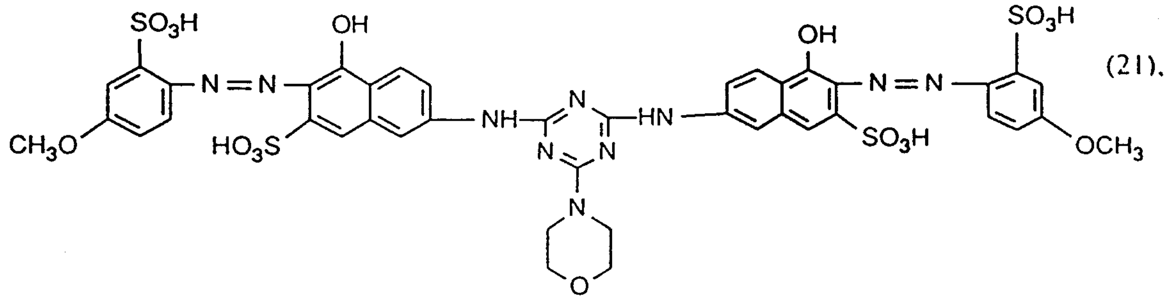

(21).

et en particulier un colorant de formule (4) qui teint en jaune ensemble avec un colorant de formule (8) qui teint en bleu et un colorant de formule (17) qui teint en rouge.

**13.** Procédé selon l'une des revendications 1 à 12, caractérisé en ce qu'on teint en présence d'un sel, et en particulier en présence d'un halogénure alcalin ou d'un sulfate alcalin, en ajoutant une partie de la quantité de sel au début du procédé de teinture et en ajoutant une autre partie peu avant avoir atteint la température de teinture ou bien après avoir atteint la température de teinture, en ajoutant à ce moment la totalité du sel ou en ajoutant le sel par portions.

**14.** Procédé selon la revendication 13, caractérisé en ce que la quantité totale de sel utilisée dépend de la quantité totale de colorant utilisée.

**15.** Procédé selon l'une des revendications 1 à 14, caractérisé en ce qu'on teint un mélange de fibres synthétiques et de fibres cellulosiques et en particulier on teint un tissu mixte polyester/coton, en présence d'un colorant de dispersion pour les fibres de synthèse, dans les conditions de la teinture des fibres de synthèse.

**16.** Procédé selon la revendication 15, caractérisé en ce qu'on teint des fibres mixtes polyester/coton en une seule étape et dans un seul bain, en utilisant à côté du mélange de'colorants selon l'une des revendications 1 à 12, un colorant de dispersion et qu'on teint dans un bain aqueux, à des températures dans l'intervalle allant de 100 à 150 °C et de préférence de 120 à 130 °C, à un pH compris entre 4 et 7,5.

**17.** Matériau et en particulier matériau textile teint selon l'une des revendications 1 à 16.